# EUROPÄISCHE PATENTSCHRIFT

(11) **EP 4 357 382 B1**
(45) Veröffentlichungstag und Bekanntmachung des Hinweises auf die Patenterteilung: **23.07.2025**
(21) Anmeldenummer: 22202536.3
(22) Anmeldetag: 19.10.2022
(51) Int. Cl.: C08G 18/08, C07F 9/28, C08G 18/70, C08G 18/77, C08G 18/79, C09D 175/04

(54) **IONISCH MODIFIZIERTES POLYISOCYANATGEMISCH**
IONICALLY MODIFIED POLYISOCYANATE MIXTURE
MÉLANGE DE POLYISOCYANATES MODIFIÉ IONIQUEMENT

(43) Veröffentlichungstag der Anmeldung: 24.04.2024
(73) Patentinhaber: Covestro Deutschland AG, 51373 Leverkusen (DE)
(72) Erfinder: LAAS, HANS-JOSEF, 51373 Leverkusen (DE); RICHTER, FRANK, 51373 Leverkusen (DE)
(74) Vertreter: Levpat

(56) Entgegenhaltungen:
- WO-A1-2019/068529
- CN-A- 114 479 423
- DE-A1- 3 240 613
- JP-A- H10 306 255
- SU-A1- 449 059
- US-A1- 2023 045 296

## Beschreibung

Die vorliegende Erfindung betrifft ein ionisch modifiziertes Polyisocyanatgemisch sowie ein Verfahren zu dessen Herstellung. Darüber hinaus betrifft die Erfindung eine Verwendung des ionisch modifizierten Polyisocyanatgemisches, Beschichtungsmittel enthaltend das ionisch modifizierte Polyisocyanatgemisch und mit dem Beschichtungsmittel beschichtete Substrate.

Wässrige Lacksysteme haben sich heute für verschiedene Anwendungsbereiche als umweltfreundliche Alternative zu lösemittelhaltigen Beschichtungsmitteln fest etabliert. Eine besondere Rolle als Rohstoff für qualitativ hochwertige wässrige Lacke spielen dabei hydrophilmodifizierte Polyisocyanate, da sie als wasserdispergierbare Vernetzerkomponenten die Formulierung wässriger Zweikomponenten-Polyurethan(2K-PUR)-Lacke ermöglichen.

Eine sehr einfache Methode zur Herstellung wasserdispergierbarer Polyisocyanate ist beispielsweise die anteilige Umsetzung hydrophober Polyisocyanate mit hydrophilen Polyetheralkoholen (siehe z. B. EP-A 0 959 087, Seite 2, Zeilen 25 - 46). Polyether-modifizierte Polyisocyanate weisen jedoch den prinzipiellen Nachteil auf, dass der für eine ausreichende Dispergierbarkeit bei einem Einsatz als Vernetzer in wässrigen 2K-PUR-Lacken erforderliche hohe Polyethergehalt den erhaltenen Beschichtungen eine permanente Hydrophilie verleiht.

Zur Umgehung dieses Nachteils wurde auch bereits versucht, durch Einbau ionischer Gruppen, insbesondere Sulfonatgruppen, hydrophil modifizierte, selbstdispergierbare Polyisocyanate herzustellen.

WO 2009/010469 beschreibt die Verwendung von aromatischen Sulfonsäuren, die genau eine primäre oder sekundäre Aminogruppe tragen und ein spezielles Substitutionsmuster aufweisen, in Kombination mit monofunktionellen Polyetheralkoholen zur Hydrophilierung von Di- oder Polyisocyanaten.

Nach der Lehre der WO 2001/88006 lassen sich durch Umsetzung beliebiger Polyisocyanate mit 2-(Cyclohexylamino)-ethansulfonsäure (CHES) oder 3-(Cyclohexylamino)-propansulfonsäure (CAPS) hydrophilierte Polyisocyanate erhalten, die als Vernetzer in wäßrigen Lacksystemen zu Beschichtungen hoher Härte sowie ausgezeichneter Lösemittel- und Chemikalienbeständigkeit führen.

EP 3 045 485 A1 beschreibt die Verwendung weiterer am Stickstoff mit Cycloaliphaten substituierter Aminopropan-, Aminobutan- und/oder Aminoisobutansulfonsäuren als Hydrophilierungsmittel für Polyisocyanate.

Die in diesen Veröffentlichungen genannten Aminosulfonsäuren liegen im Allgemeinen als zwitterionische Verbindungen vor, die hohe Schmelzpunkte besitzen und in Polyisocyanaten und auch organischen Lösungsmitteln unlöslich oder zumindest sehr schwer löslich sind. Ihre vollständige Umsetzung mit Polyisocyanaten erfordert in der Regel selbst bei hohen Temperaturen sehr lange Reaktionszeiten.

Unter diesen Bedingungen - lange Reaktionszeit und/oder hohe Temperatur - reagieren Sulfonsäuregruppen in Gegenwart von Wasser entziehenden Verbindungen, wie sie Isocyanate darstellen, jedoch vermehrt auch untereinander zu Sulfonsäureanhydriden oder mit Isocyanatgruppen zu gemischten Anhydriden aus Sulfonsäuren und Carbaminsäuren, sogenannten Carbamoylsulfonaten, ab. Diese Nebenreaktionen reduzieren bei den vorstehend beschriebenen Verfahren zur Herstellung Sulfonatgruppen enthaltender Polyisocyanatvernetzer die Anzahl der Hydrophilie verleihenden Säuregruppen und verringern damit die Emulgierfähigkeit der Reaktionsprodukte.

Zwar lassen sich nach den Verfahren der EP 3 560 975 und EP 3 560 976 durch Umsetzung von Aminosulfonsäuren mit Polyisocyanaten in Gegenwart von Antioxidantien bzw. Radikalfängern oder nach dem Verfahren der WO 2019/206861 unter Verwendung von Aminosulfonsäuren mit definiertem Wassergehalt einige der genannten Nachteile Sulfonatgruppen enthaltender Polyisocyanate vermindern, das Kernproblem bei der Verwendung von Aminosulfonsäuren, ihr zwitterionischer Charakter und die damit verbundene schlechte Löslichkeit, die lange Reaktionszeiten bei hohen Temperaturen erforderlich macht, bleibt aber nach wie vor ungelöst.

WO 98/38196 beschreibt Umsetzungsprodukte von Polyisocyanaten mit Trialkylammoniumneutralisierten Phosphat- oder -Phosphonatgruppen aufweisenden Verbindungen, beispielsweise Triethylaminsalzen von Nonylphenol gestarteten Ethylenoxidpolyethern mit endständiger Phosphonsäuregruppierung, als Emulgatoren zur Herstellung wasserdispergierbarer Polyisocyanate. Die Isocyanatgruppen reagieren dabei mit der Säuregruppe ab.

Gegenstand der WO 2014/048634 sind oberflächenaktive Mittel, hergestellt durch Umsetzung aliphatischer und/oder cycloaliphatischer Polyisocyanate mit monofunktionellen Polyethylenoxidpolyethern und gleichzeitig einem Gemisch Amin-neutralisierter Phosphorsäuremono- und -diester, beispielsweise einem Gemisch von 2-Ethylhexylphosphaten (45 mol-% Monoester, 55 mol-% Diester).

Nach der Lehre der WO 98/56843 eignen sich Umsetzungsprodukte aliphatischer, cycloaliphatischer oder aromatischer Polyisocyanate mit gegebenenfalls zumindest teilweise neutralisierten, sauren Phosphorsäureestern als Emulgatoren für Polyisocyanate. Als geeignete Phosphorsäureester werden solche auf Basis von gegebenenfalls alkoxylierten Fettalkoholen aber auch Gemische einfacher Mono- und Dialkylphosphate genannt. Die Anmelder "vermuten", dass die sauren Phosphorsäureester über -P-O-H mit Isocyanatgruppen reagieren.

Die nach den Verfahren der WO 98/38196, WO 2014/048634 und WO 98/56843 erhältlichen, auf Phosphor- oder Phosphonsäureestern und Ethylenoxidgruppen enthaltenden Aufbaukomponenten basierenden, hydrophilen Polyisocyanate weisen allerdings die eingangs genannten Nachteile polyethermodifizierter Polyisocyanate auf. Aus der WO 2019/068529 ist bekannt, dass Polyisocyanate, die nach dem Verfahren der WO 98/56843 unter Verwendung von mit Triethylamin anteilig neutralisierten Gemischen von Monobutylphosphat mit molar überschüssigen Mengen an Dibutylphosphat erhalten wurden, als Vernetzerkomponenten in wässrigen 2K-PUR-Lacken ungeeignet sind, da sie häufig zu Beschichtungen mit unzureichendem Glanz führen.

Nach der JP 2020186207 eignen sich auch zwitterionische Aminophosphonsäuremonoester als Bausteine zur Hydrophilierung von Polyisocyanaten. Ihre Herstellung über die Diesterverbindungen gelingt allerdings nur in einem sehr aufwendigen Verfahren im sehr kleinen Maßstab und in mäßigen Ausbeuten. Auch solche Produkte konnten sich bisher nicht im Markt durchsetzen.

Aufgabe der vorliegenden Erfindung war es daher, neue ionisch hydrophilierte Polyisocyanate zur Verfügung zu stellen, die in einem einfacheren Verfahren als den bekannten Verfahren des Standes der Technik aus gut zugänglichen Rohstoffen sicher und reproduzierbar herstellbar sind und sich durch niedrige Viskositäten und sehr gute Dispergierbarkeit auszeichnen.

Diese Aufgabe konnte jetzt mit dem erfindungsgemäßem ionisch modifizierten Polyisocyanatgemisch sowie einem Verfahren zu dessen Herstellung gelöst werden. Die vorliegende Erfindung beruht auf der überraschenden Beobachtung, dass die Modifizierung von Polyisocyanaten mit Salzen monosubstituierter Phosphinsäuren zu P-substituierte Carbamoylphosphinatgruppen enthaltenden Polyisocyanaten bereits bei sehr niedrigen Temperaturen abläuft und dabei ein ionisch modifiziertes Polyisocyanatgemisch mit hervorragender Dispergierbarkeit und niedriger Viskosität liefert.

Gegenstand der vorliegenden Erfindung ist ein ionisch modifiziertes Polyisocyanatgemisch, enthaltend eine oder mehrere Isocyanatgruppen und eine oder mehrere P-substituierte Carbamoylphospinatstrukturen.

Gegenstand der Erfindung ist auch ein Verfahren zur Herstellung eines ionisch modifizierten Polyisocyanatgemisches, umfassend eine Umsetzung von
1) mindestens einem Polyisocyanat A) mit
2) mindestens einer monosubstituierten Phosphinsäure B), wobei die Phosphinsäuregruppen zumindest anteilig vor, während und/oder im Anschluß an die Umsetzung von A) mit B) neutralisiert werden, und
3) gegebenenfalls mit weiteren nichtionisch hydrophilen oder hydrophoben organischen Verbindungen C), die mindestens eine gegenüber Isocyanaten reaktive Gruppe aufweisen, und
4) gegebenenfalls in Gegenwart weiterer Hilfs- und Zusatzstoffe D).

Erfindungsgemäß bedeuten die Ausdrücke "umfassend", "enthaltend" usw. bevorzugt "im Wesentlichen bestehend aus" und besonders bevorzugt "bestehend aus". Die in den Patentansprüchen und in der Beschreibung genannten weiteren Ausführungsformen können beliebig kombiniert werden, sofern sich aus dem Kontext nicht eindeutig das Gegenteil ergibt.

"Mindestens ein", wie hierin verwendet, bezieht sich auf 1 oder mehr, beispielsweise 2, 3, 4, 5, 6, 7, 8, 9 oder mehr. Im Zusammenhang mit Bestandteilen der hierin beschriebenen Verbindungen bezieht sich diese Angabe nicht auf die absolute Menge an Molekülen, sondern auf die Art des Bestandteils. "Mindestens ein Polyisocyanat A)" bedeutet daher beispielsweise, dass nur eine Art von Polyisocyanat A) oder mehrere verschiedene Arten von Polyisocyanaten A), ohne Angaben über die Menge der einzelnen Verbindungen zu machen, enthalten sein können.

Zahlenwerte, die hierin ohne Dezimalstellen angegeben sind, beziehen sich jeweils auf den vollen angegebenen Wert mit einer Dezimalstelle. So steht beispielsweise "99 %" für "99,0 %".

Numerische Bereiche, die in dem Format "in/von x bis y" angegeben sind, schließen die genannten Werte ein. Wenn mehrere bevorzugte numerische Bereiche in diesem Format angegeben sind, ist es selbstverständlich, dass alle Bereiche, die durch die Kombination der verschiedenen Endpunkte entstehen, ebenfalls erfasst werden.

Vorliegend ist der Begriff "P-substituiert" definiert als ein beliebiger Substituent der nicht Wasserstoff ist und vorzugsweise aus den im nachfolgenden Text genannten Substituenten oder allgemeinen Formeln ausgewählt ist oder sich aus den genannten monosubstituierten Phosphinsäuren ergibt. Beispielhaft sei auf die allgemeine Formel (II) oder (III) verwiesen in welchen R als "P-Substituent" jeweils von Wasserstoff verschieden ist.

In anderen Worten bedeutet "P-substituiert" vorliegend, dass der Substituent am Phosphoratom der Carbamoylphosphinatstruktur von Wasserstoff verschieden ist.

Vorliegend ist der Begriff "aliphatisch" definiert als nicht-aromatische Kohlenwasserstoffgruppen, die gesättigt oder ungesättigt sind.

Dabei werden mit dem Begriff "linearaliphatisch" solche Verbindungen bezeichnet, die völlig frei von cyclischen Strukturelementen sind, während der Begriff "alicyclisch" oder "cycloaliphatisch" als gegebenenfalls substituierte, carbocyclische oder heterocyclische Verbindungen oder Einheiten definiert, die nicht aromatisch sind (wie z.B. Cycloalkane, Cycloalkene oder Oxa-, Thia-, Aza- oder ThiazacycloalkanD). Besondere Beispiele sind Cyclohexylgruppen, Cyclopentylgruppen und ihre N- oder O-heterocyclischen Derivate wie z.B. Pyrimidin, Pyrazin, Tetrahydropyran oder Tetrahydrofuran.

Vorliegend ist der Begriff "araliphatisch" definiert als Kohlenwasserstoffreste, die sowohl aus einer aromatischen als auch aus einer gesättigten oder ungesättigten Kohlenwasserstoffgruppe bestehen, die direkt an den aromatischen Rest gebunden ist.

Vorliegend ist der Begriff "alicyclisch" oder "cycloaliphatisch" definiert als gegebenenfalls substituierte, carbocyclische oder heterocyclische Verbindungen oder Einheiten, die nicht aromatisch sind (wie z.B. Cycloalkane, Cycloalkene oder Oxa-, Thia-, Aza- oder Thiazacycloalkane). Besondere Beispiele sind Cyclohexylgruppen, Cyclopentylgruppen und ihre N- oder O-heterocyclischen Derivate wie z.B. Pyrimidin, Pyrazin, Tetrahydropyran oder Tetrahydrofuran.

Für den Fall, dass die Gruppen oder Verbindungen als "gegebenenfalls substituiert" oder "substituiert" offenbart werden, sind geeignete Substituenten -F, -Cl, -Br, -I, -OH, -OCH₃, OCH₂CH₃, -O-Isopropyl oder -O-n-Propyl, -OCF₃, -CF₃, -S-C₁₋₆-Alkyl und/oder (gegebenenfalls über ein angehängtes Heteroatom) eine lineare oder verzweigte, aliphatische und/oder alicyclische Struktureinheit mit 1 bis 12 Kohlenstoffatomen, die jeweils als Ersatz für ein kohlenstoffgebundenes Wasserstoffatom des betreffenden Moleküls fungiert. Bevorzugte Substituenten sind Halogen (insbesondere -F, -CI), C₁₋₆-Alkoxy (insbesondere Methoxy und Ethoxy), Hydroxy, Trifluormethyl und Trifluormethoxy, die jeweils als Ersatz für ein an Kohlenstoff gebundenes Wasserstoffatom des betreffenden Moleküls fungieren.

Polyisocyanate A) für das erfindungsgemäße ionisch modifizierte Polyisocyanatgemisch sowie das erfindungsgemäße Verfahren sind beliebige Diisocyanate, Triisocyanate und/oder Polyisocyanate mit aliphatisch, cycloaliphatisch, araliphatisch und/oder aromatisch gebundenen Isocyanatgruppen.

Geeignete Diisocyanate und Triisocyanate A) sind beliebige, auf verschiedene Weise, beispielsweise durch Phosgenierung der korrespondierenden Diamine oder Triamine in der Flüssig- oder Gasphase oder auf phosgenfreien Weg, wie z. B. durch thermische Urethanspaltung, zugängliche Diisocyanate und Triisocyanate, vorzugsweise solche des Molekulargewichtsbereichs 140 bis 400 mit aliphatisch, cycloaliphatisch, araliphatisch und/oder aromatisch gebundenen Isocyanatgruppen, wie z. B. 1,4-Diisocyanatobutan, 1,5-Diisocyanatopentan (PDI), 1,6-Diisocyanatohexan (HDI), 2-Methyl-1,5-diisocyanatopentan, 1,5-Diisocyanato-2,2-dimethylpentan, 2,2,4- bzw. 2,4,4-Trimethyl-1,6-diisocyanatohexan, 1,8-Diisocyanatooctan, 1,9-Diisocyanatononan 1,10-Diisocyanatodecan, 1,3- und 1,4-Diisocyanatocyclohexan, 1,3- und 1,4-Bis-(isocyanatomethyl)-cyclohexan, 1-Isocyanato-3,3,5-trimethyl-5-isocyanatomethylcyclohexan (Isophorondiisocyanat, IPDI), 2,4'- und 4,4'-Diisocyanatodicyclohexylmethan (H₁₂-MDI), 4,4'-Diisocyanato-3,3'-dimethyldicyclohexylmethan, 4,4'-Diisocyanato-3,3',5,5'-tetramethyldicyclo-hexylmethan, 4,4'-Diisocyanato-1,1'-bi(cyclohexyl), 4,4'-Diisocyanato-3,3'-dimethyl-1,1'-bi(cyclohexyl), 4,4'-Diisocyanato-2,2',5,5'-tetra-methyl-1,1'-bi(cyclohexyl), 1,8-Diisocyanato-p-menthan, 1,3-Diisocyanatoadamantan, 1,3-Dimethyl-5,7-diisocyanatoadamantan, 1-Isocyanato-1-methyl-4(3)isocyanato-methylcyclohexan, Bis-(isocyanatomethyl)-norbornan (NBDI), 4-Isocyanatomethyl-1,8-octandiisocyanat (Triisocyanatononan; TIN), 1,3- und 1,4-Bis(isocyanatomethyl)benzol (Xylylendiisocyanat, XDI), 1,3- und 1,4-Bis-(2-isocyanato-prop-2-yl)-benzol (TMXDI), 1,3-Bis(isocyanatomethyl)-4-methylbenzol, 1,3-Bis(isocyanatomethyl)-4-ethylbenzol, 1,3-Bis(isocyanatomethyl)-5-methylbenzol, 1,3-Bis(isocyanatomethyl)-4,5-dimethylbenzol, 1,4-Bis(isocyanatomethyl)-2,5-dimethylbenzol, 1,4-Bis(isocyanatomethyl)-2,3,5,6-tetramethylbenzol, 1,3-Bis(isocyanatomethyl)-5-tert.-butylbenzol, 1,3-Bis(isocyanatomethyl)-4-chlorbenzol, 1,3-Bis(isocyanatomethyl)-4,5-dichlorbenzol, 1,3-Bis(isocyanatomethyl)-2,4,5,6-tetrachlorbenzol, 1,4-Bis(isocyanatomethyl)-2,3,5,6-tetrachlorbenzol, 1,4-Bis(isocyanatomethyl)-2,3,5,6-tetrabrombenzol, 1,4-Bis(2-isocyanatoethyl)benzol und 1,4-Bis(isocyanatomethyl)naphthalin, 1,2-, 1,3- und 1,4-Diisocyanatobenzol (Phenylendiisocyanat), 2,4- und 2,6-Diisocyanatotoluol (TDI), 2,3,5,6-Tetramethyl-1,4-diisocyanatobenzol, die isomeren Diethylphenylendiisocyanate, Diisopropylphenylendiisocyanate, Diisododecylphenylendiisocyanate und Biphenyldiisocyanate, 3,3'-Dimethoxybiphenyl-4,4'-diisocyanat, 2,2'-, 2,4'- und 4,4'-Diisocyanatodiphenylmethan (MDI), 3,3'-Dimethyldiphenylmethan-4,4'-diisocyanat, 4,4'-Diisocyanatodiphenylethan, 1,5-Diisocyanatonaphthalin (Naphthylendiisocyanat, NDI), Diphenyletherdiisocyanat, Ethylenglycoldiphenyletherdiisocyanat, Diethylenglycoldiphenyletherdiisocyanat, 1,3-Propylenglycoldiphenyletherdiisocyanat, Benzophenondiisocyanat, Triisocyanatobenzol, 2,4,6-Triisocyanatotoluol, Trimethylbenzoltriisocyanat, Diphenylmethan-2,4,4'-triisocyanat, 3-Methyldiphenylmethan-4,6,4'-triisocyanat, die isomeren Naphthalintriisocyanate und Methylnaphthalindiisocyanate, Triphenylmethantriisocyanat, 2,4-Diisocyanato-1-[(5-isocyanato-2-methylphenyl)methyl]benzol oder Mischungen aus mindestens zwei solcher Diisocyanate und Triisocyanate.

Geeignete Polyisocyanate A) sind beliebige, durch Modifizierung einfacher aliphatischer, cycloaliphatischer, araliphatischer und/oder aromatischer Diisocyanate und/oder Triisocyanate, beispielsweise solcher der vorstehend genannten Art, hergestellte Polyisocyanate mit Uretdion-, Isocyanurat-, Allophanat-, Biuret-, Iminooxadiazindion- und/oder Oxadiazintrionstruktur, wie sie beispielsweise in J. Prakt. Chem. 336 (1994) 185 - 200, in DE-A 1 670 666, DE-A 1 954 093, DE-A 2 414 413, DE-A 2 452 532, DE-A 2 641 380, DE-A 3 700 209, DE-A 3 900 053 und DE-A 3 928 503 oder in EP-A 0 336 205, EP-A 0 339 396 EP-A 0 798 299, EP-A 0 962 454, EP-A 0 962 455, EP-A 2 785 760, EP-A 2 883 895, EP-A 3 107 922, EP-A 3 107 948 und EP-A 3 337 836 beispielhaft beschrieben sind oder um beliebige Gemische solcher Polyisocyanate.

Gegebenenfalls können bei der Modifizierung der genannten Diisocyanate und/oder Triisocyanate zu Polyisocyanaten A) in untergeordneten Mengen auch Monoisocyanate, insbesondere solche des Molekulargewichtsbereichs 99 bis 300, wie z. B. n-Butylisocyanat, n-Amylisocyanat, n-Hexylisocyanat, n-Heptylisocyanat, n-Octylisocyanat, Undecylisocyanat, Dodecylisocyanat, Tetradecylisocyanat, Cetylisocyanat, Stearylisocyanat, Cyclopentylisocyanat, Cyclohexylisocyanat, 3- bzw. 4-Methylcyclohexylisocyanat, Benzylisocyanat, Phenylisocyanat oder Naphtylisocyanat, mitverwendet werden. Falls überhaupt kommen Monoisocyanate dabei in Mengen von bis 30 Gew.-%, vorzugsweise bis zu 20 Gew.-%, besonders bevorzugt bis zu 10 Gew.-%, bezogen auf die Gesamtmenge an Mono-, Di- und Triisocyanaten, zum Einsatz

Bei der Herstellung der Polyisocyanate A) schließt sich an die eigentliche Modifizierungsreaktion in der Regel ein weiterer Verfahrenschritt zur Abtrennung der nicht umgesetzten überschüssigen monomeren Diisocyanate und/oder Triisocyanate und gegebenenfalls Monoisocyanate an. Diese Monomerenabtrennung erfolgt nach an sich bekannten Verfahren vorzugsweise durch Dünnschichtdestillation im Vakuum oder durch Extraktion mit geeigneten gegenüber Isocyanatgruppen inerten Lösungsmitteln, beispielsweise aliphatischen oder cycloaliphatischen Kohlenwasserstoffen wie Pentan, Hexan, Heptan, Cyclopentan oder Cyclohexan.

In einer bevorzugten Ausführungsform enthält das erfindungsgemäße ionisch modifizierte Polyisocyanatgemisch zusätzlich eine oder mehrere Isocyanurat-, Allophanat-, Urethan-, Harnstoff-, Uretdion-, Iminooxadiazindion-, Oxadiazintrion- und/oder Biuretstruktur.

Bevorzugt kommen beim erfindungsgemäßen Verfahren als Polyisocyanat A) Polyisocyanate der genannten Art zum Einsatz, die einen Gehalt an Isocyanatgruppen von 6,0 bis 26,0 Gew.-%, vorzugsweise von 8,0 bis 25,0 Gew.-%, besonders bevorzugt 10,0 bis 24,0 Gew.-%, und einen Gehalt an monomeren Diisocyanaten von weniger als 0,14 Gew.-%, vorzugsweise weniger als 0,12 Gew.-%, besonders bevorzugt von weniger als 0,10 Gew.-% aufweisen. Für den alternativen, optionalen Fall, dass Triisocyanate und/oder Monoisocyanate zur Herstellung der Polyisocyanate A) eingesetzt wurden, beziehen sich die vorstehend genannten Rest-Monomeren Gehalte von weniger als 0,14 Gew.-%, vorzugsweise weniger als 0,12 Gew.-%, besonders bevorzugt von weniger als 0,10 Gew.-% auf alle eingesetzten Diisocyanate, Triisocyanate und Monoisocyanate. Die NCO-Gehalte werden nach DIN EN ISO 11909:2007-05, die Rest-Monomeren Gehalte nach DIN EN ISO 10283:2007-11 gaschromatographisch mit internem Standard bestimmt.

Besonders bevorzugte Polyisocyanate A) für das erfindungsgemäße Verfahren sind solche der genannten Art mit ausschließlich aliphatisch und/oder cycloaliphatisch gebundenen Isocyanatgruppen.

Ganz besonders bevorzugte Polyisocyanate A) sind mindestens Isocyanuratstrukturen enthaltende Polyisocyanate auf Basis von 1,5-Diisocyanatopentan, 1,6-Diisocyanatohexan, 1-Isocyanato-3,3,5-trimethyl-5-isocyanatomethylcyclohexan, 1,3-Bis(isocyanatomethyl)-benzol, Bis-(isocyanatomethyl)-norbornan und/oder 4,4'-Diisocyanatodicyclohexylmethan.

In einer weiteren bevorzugten Ausführungsform weist das erfindungsgemäße ionisch modifizierte Polyisocyanatgemisch einen nach DIN EN ISO 11909:2007-05 bestimmten NCO-Gehalt von 5,8 bis 25,9 Gew.-%, vorzugsweise von 7,8 bis 24,9 Gew,-%, besonders bevorzugt von 9,7 bis 23,9 Gew.-%, bezogen auf das Gesamtgewicht des Polyisocyanatgemisches, auf.

In einer weiteren bevorzugten Ausführungsform weist das erfindungsgemäße ionisch modifizierte Polyisocyanatgemisch einen nach DIN EN ISO 10283:2007-11 gaschromatographisch mit internem Standard gemessenen Rest-Monomeren Gehalt von weniger als 0,14 Gew.-%, bevorzugt weniger als 0,12 Gew.-% und besonders bevorzugt weniger als 0,10 Gew.-%, bezogen auf das Gesamtgewicht des Polyisocyanatgemisches, auf.

Beim erfindungsgemäßen Verfahren werden die genannten Polyisocyanate A) mit mindestens einer monosubstituierten Phosphinsäure B) umgesetzt. Hierbei handelt es sich um beliebige Phosphinsäuren der allgemeinen Formel (I) 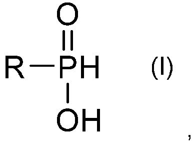 in welcher R nicht Wasserstoff ist und vorzugsweise für einen beliebigen gesättigten oder ungesättigten, linearen oder verzweigten, aliphatischen Rest mit 1 bis 18 Kohlenstoffatomen, gesättigten oder ungesättigten cycloaliphatischen Rest mit 5 bis 18 Kohlenstoffatomen, araliphatischen Rest mit 7 bis 18 Kohlenstoffatomen und/oder aromatischen Rest mit 6 bis 18 Kohlenstoffatomen steht, der jeweils substituiert oder unsubstituiert ist und/oder Heteroatome in der Kette aufweist.

Vorzugsweise steht R in der allgemeinen Formel (I) für einen beliebigen gesättigten oder ungesättigten, linearen oder verzweigten, aliphatischen Rest mit 1 bis 18 Kohlenstoffatomen, der substituiert oder unsubstituiert ist und/oder Heteroatome in der Kette aufweist, und/oder für einen gesättigten oder ungesättigten cycloaliphatischen Rest mit 5 bis 18 Kohlenstoffatomen, der substituiert oder unsubstituiert ist und/oder Heteroatome in der Kette aufweist, und/oder für einen araliphatischen Rest mit 7 bis 18 Kohlenstoffatomen, der substituiert oder unsubstituiert ist und/oder Heteroatome in der Kette aufweist, und/oder für einen aromatischen Rest mit 6 bis 18 Kohlenstoffatomen, der jeweils substituiert oder unsubstituiert ist und/oder Heteroatome in der Kette aufweist.

Derartige monosubstituierten Phosphinsäuren sind bekannt. Sie lassen sich beispielsweise nach dem Verfahren der EP 0 080 149 durch saure Hydrolyse von Dichlorphosphinen oder durch Umsetzung von Alkyl- oder Arylhalogeniden mit Hypophosphorsäure, wie in WO 2006/038870 und M. Kalek, J. Stawinski / Tetrahedron 65 (2009) 10406 - 10412 beschrieben, erhalten.

Geeignete Phosphinsäuren sind beispielsweise Methylphosphinsäure, Ethylphosphinsäure, n-Propylphosphinsäure, Isopropylphosphinsäure, n-Butylphosphinsäure, Cyclopentylphosphinsäure, (2-Methylcyclopentyl)phosphinsäure, (3-Methylcyclopentyl)phosphinsäure, (2-Ethylcyclopentyl)phosphinsäure, Cyclohexylphosphinsäure, (2-Methylcyclohexyl)phosphinsäure, (3-Methylcyclohexyl)phosphinsäure, (4-Methylcyclohexyl)phosphinsäure, (1,2-Dimethylcyclohexyl)phosphinsäure, (3-Chlorcyclohexyl)phosphinsäure, (2-Bromocyclohexyl)phosphinsäure, Cyclooctylphosphinsäure, Cyclododecylphosphinsäure, (2-Cyclohexen-1-yl)phosphinsäure, (3,5,5-Trimethyl-cyclohexen-2-yl)phosphinsäure, (4-Cycloocten-1-yl)phosphinsäure, (Bicyclo[2.2.1]heptan-2-yl)phosphinsäure, Bicyclo[3.3.0]oct-1-yl-phosphinsäure, 1-Adamantylphosphinsäure, (Tetrahydrofuran-2-yl)phosphinsäure, (Thiophen-2-yl)phosphinsäure, Phenylphosphinsäure, 2-Tolylphosphinsäure, 2-Methoxyphenylphosphinsäure, 3-Methoxyphenylphosphinsäure, 4-Nitrophenylphosphinsäure, (2-Vinylphenyl)phosphinsäure, (4-Vinylphenyl)phosphinsäure, 4-Acetylphenylphosphinsäure, 4-Acetamidophenylphosphinsäure, (4-Benzyl-phenyl)-phosphinsäure, Phenethylphosphinsäure, Bibenzyl-4-yl-phosphinsäure, Benzylphosphinsäure, (D)-Styrylphosphinsäure, (2,3-Dihydro-1H-inden-2-yl)phospinsäure, 1-Naphthylphosphinsäure, 2-Naphthylphosphinsäure, Phenanthren-9-ylphosphinsäure oder Mischungen aus mindestens zwei solcher Phosphinsäuren.

Bevorzugte Phosphinsäuren B) für das erfindungsgemäße Verfahren sind solche der allgemeinen Formel (I), in welcher der Rest R für einen gegebenenfalls substituierten aliphatischen oder gegebenenfalls substituierten aromatischen Rest, besonders bevorzugt für einen gegebenenfalls substituierten aromatischen Rest steht.

Ganz besonders bevorzugte Phosphinsäure B) ist Phenylphosphinsäure.

Die Phosphinsäuren B) kommen beim erfindungsgemäßen Verfahren vorzugsweise in einer Menge von 0,3 bis 25,0 Gew.-%, besonders bevorzugt von 0,5 bis 15,0 Gew.-%, ganz besonders bevorzugt von 1,0 bis 10,0 Gew.-%, bezogen auf das Gesamtgewicht der Komponenten A) und B), zum Einsatz. Die Menge an Phosphinsäuren, die in den erfindungsgemäßen ionisch modifizierten Polyisocyanatgemischen chemisch gebunden vorliegen, lässt sich auf einfache Weise, beispielsweise nach Hydrolyse oder Alkoholyse durch präparatives Isolieren oder chromatographische Methoden, wie z. B. präparative Gelchromatographie, bestimmen und kann über einen breiten Bereich beliebig gewählt werden, vorzugsweise weisen die erfindungsgemäßen ionisch modifizierten Polyisocyanate einen Gehalt an Carbamoylphosphinatstrukturen (berechnet als O₂PCONH, Molekulargewicht = 106 g/mol) von 0,10 bis 33,1 Gew.-%, bevorzugt von 0,17 bis 19,8 Gew.-%, besonders bevorzugt von 0,33 bis 13,2 Gew.-%, bezogen auf das Gesamtgewicht des Polyisocyanatgemisches, auf.

Die Phosphinsäuregruppen werden beim erfindungsgemäßen Verfahren zumindest anteilig vor, während und/oder im Anschluß an die Umsetzung von A) mit B) neutralisiert, wobei sich Phosphinat-Anionen bilden. Als Neutralisationsmittel geeignet sind dabei beliebige Basen, beispielsweise Alkalihydroxide oder -alkoholate.

Bevorzugt kommen als Neutralisationsmittel aber tertiäre Amine zum Einsatz, beispielsweise tertiäre Monoamine, wie z. B. Trimethylamin, Triethylamin, Tripropylamin, Tributylamin, N,N-Dimethylethylamin, N,N-Dimethylpropylamin, N,N-Dimethylisopropylamin, N,N-Dimethylbutylamin, N,N-Dimethylisobutylamin, N,N-Dimethyloctylamin, N,N-Dimethyl-2-ethylhexylamin, N,N-Dimethyllaurylamin, N,N-Diethylmethylamin, N,N-Diethylpropylamin, N,N-Diethylbutylamin, N,N-Diethylhexylamin, N,N-Diethyloctylamin, N,N-Diethyl-2-ethylhexylamin, N,N-Diethyllaurylamin, N,N-Diisopropylmethylamin, N,N-Diisopropylethylamin, N,N-Diisopropylbutylamin, N,N-Diisopropyl-2-ethylhexylamin, N,N-Dioctylmethylamin, N,N-Dimethylallylamin, N,N-Dimethylbenzylamin, N,N-Diethylbenzylamin, N,N-Dibenzylmethylamin, Tribenzylamin, N,N-Dimethyl-4-methylbenzylamin, N,N-Dimethylcyclohexylamin, N,N-Diethylcyclohexylamin, N,N-Dicyclohexylmethylamin, N,N-Dicyclohexylethylamin, Tricyclohexylamin, N-Methylpyrrolidin, N-Ethylpyrrolidin, N-Propylpyrrolidin, N-Butylpyrrolidin, N-Methylpiperidin, N-Ethylpiperidin, N-Propylpiperidin, N-Butylpiperidin, N-Methylmorpholin, N-Ethylmorpholin, N-Propylmorpholin, N-Butylmorpholin, N-sec-Butylmorpholin, N-tert-Butylmorpholin, N-Isobutylmorpholin und Quinuclidin oder tertiäre Diamine, wie z. B. 1,3-Bis-(dimethylamino)-propan, 1,4-Bis-(dimethylamino)-butan und N,N-Dimethylpiperazin, oder beliebige Gemische solcher tertiären Amine.

Geeignete, jedoch weniger bevorzugte tertiäre Amine sind daneben auch solche, die gegenüber Isocyanaten reaktive Gruppen tragen, beispielsweise Alkanolamine, wie z. B. Dimethylethanolamin, Methyldiethanolamin oder Triethanolamin.

Bevorzugte tertiäre Amine sind Triethylamin, N,N-Dimethylbutylamin, N,N-Dimethyl-2-ethylhexylamin, N,N-Diethylmethylamin, N,N-Diisopropylethylamin, N,N-Diisopropyl-2-ethylhexylamin N,N-Dimethylcyclohexylamin, N,N-Dicyclohexylmethylamin, N-Methylpyrrolidin, N-Methylpiperidin, N-Ethylpiperidin, N-Methylmorpholin, N-Ethylmorpholin, N-Isobutylmorpholine oder deren Gemische.

Besonders bevorzugt sind Triethylamin, N,N-Dimethylbutylamin, N,N-Diethylmethylamin, N,N-Diisopropylethylamin, N,N-Dimethylcyclohexylamin, N-Methylpiperidin, N-Ethylmorpholin oder deren Gemische.

Die genannten Neutralisationsmittel, vorzusweise Neutralisationsamine kommen beim erfindungsgemäßen Verfahren in solchen Mengen zum Einsatz, die einem Äquivalentverhältnis von Neutralisationsmittel zu Phosphinsäuregruppen der Komponente B) von 0,2 bis 2,0, vorzugsweise von 0,5 bis 1,5, besonders bevorzugt 0,95 bis 1,05 entsprechen. Gleiches gilt für das erfindungsgemäße ionisch modifizierte Polyisocyanatgemisch in einer bevorzugten Ausführungsform.

Vorzugsweise wird die mindestens eine monosubstituierte Phosphinsäure B) vor der Umsetzung mit dem mindestens einen Polyisocyanat A) mit einem geeigneten tertiären Amin der genannten Art zu Ammoniumphosphinat-Salzen neutralisiert.

Ausgangsverbindungen C) für das erfindungsgemäße Verfahren oder die erfindungsgemäßen ionisch modifizierten Polyisocyanatgemische sind beliebige nichtionisch hydrophile oder hydrophobe Verbindungen, die mindestens eine gegenüber Isocyanaten reaktive Gruppe aufweisen. Hierbei ist der Begriff "hydrophil" definiert als eine Wasserlöslichkeit einer Verbindung von mindestens 500 g / Liter, vorzugsweise eine vollständige Wasserlöslichkeit, und der Begriff "hydrophob" als eine Wasserlöslichkeit einer Verbindung von höchstens 100 g / Liter, vorzugsweise eine vollständige Unlöslichkeit in Wasser, jeweils bestimmt bei 20°C.

Geeignete nichtionisch hydrophile Verbindungen C) sind beispielsweise ein- oder mehrwertige, im statistischen Mittel 5 bis 50 Ethylenoxideinheiten pro Molekül aufweisende Polyalkylenoxidpolyetheralkohole, wie sie in an sich bekannter Weise durch Alkoxylierung geeigneter Startermoleküle zugänglich sind (siehe z. B. Ullmanns Encyclopädie der technischen Chemie, 4. Auflage, Band 19, Verlag Chemie, Weinheim S. 31 - 38). Solche Startermoleküle können beispielsweise beliebige ein- oder mehrwertige Alkohole des Molekulargewichtsbereiches 32 bis 300 sein, wie z. B. Methanol, Ethanol, n-Propanol, Isopropanol, n-Butanol, Isobutanol, sec-Butanol, die isomeren Pentanole, Hexanole, Octanole und Nonanole, n-Decanol, n-Dodecanol, n-Tetradecanol, n-Hexadecanol, n-Octadecanol, Cyclohexanol, die isomeren Methyl-cyclohexanole, Hydroxymethylcyclohexan, 3-Methyl-3-hydroxymethyloxetan, Benzylalkohol, Phenol, die isomeren Kresole, Octylphenole, Nonylphenole und Naphthole, Furfurylalkohol, Tetrahydrofurfurylalkohol, 1,2-Ethandiol, 1,2- und 1,3-Propandiol, die isomeren Butandiole, Pen-tandiole, Hexandiole, Heptandiole und Octandiole, 1,2- und 1,4-Cyclohexandiol, 1,4-Cyclohexandi-methanol, 4,4'-(1-Methylethyliden)-biscyclohexanol, 1,2,3-Propantriol, 1,1,1-Trimethylolethan, 1,2,6-Hexantriol, 1,1,1-Trimethylolpropan, 2,2-Bis(hydroxymethyl)-1,3-propandiol oder 1,3,5-Tris(2-hydroxyethyl)-isocyanurat.

Für die Alkoxylierungsreaktion geeignete Alkylenoxide sind insbesondere Ethylenoxid und Propylenoxid, die in beliebiger Reihenfolge oder auch im Gemisch bei der Alkoxylierungsreaktion eingesetzt werden können. Geeignete Polyetheralkohole sind entweder reine Polyethylenoxidpolyetheralkohole oder gemischte Polyalkylenoxidpolyether, deren Alkylenoxideinheiten zu mindestens 70 mol-%, vorzugsweise zu mindestens 80 mol-% aus Ethylenoxideinheiten bestehen.

Bevorzugte Polyalkylenoxidpolyetheralkohole C) sind solche, die unter Verwendung der oben genannten Monoalkohole des Molekulargewichtsbereiches 32 bis 150 als Startermoleküle hergestellt wurden. Besonders bevorzugte Polyetheralkohole sind reine Polyethylenglycolmonomethyletheralkohole, die im statistischen Mittel 5 bis 50, ganz besonders bevorzugt 5 bis 25 Ethylenoxideinheiten aufweisen.

Nichtionisch hydrophile Verbindungen C) kommen beim erfindungsgemäßen Verfahren, falls überhaupt, in Mengen von bis zu 30 Gew.-%, vorzugsweise bis zu 25 Gew.-%, besonders bevorzugt bis zu 20 Gew.-%, bezogen auf das Ausgangspolyisocyanat A) zum Einsatz.

Geeignete hydrophobe Verbindungen C) sind beispielsweise aliphatische Alkohole oder Fettsäureesteralkohole mit jeweils mindestens 8 Kohlenstoffatomen.

Geeignete aliphatische hydrophobe Alkohole sind beispielweise 1-Octanol, 2-Ethyl-1-hexanol, die isomeren Nonanole, Decanole, Undecanole, Dodecanole, Tridecanole, Tetradecanole, Pentadecanole, Hexadecanole und 3-Phenyl-2-propenol (Zimtalkohol) sowie auf diesen Alkoholen gestartete hydrophobe Polyalkylenoxidalkohole, deren Alkylenoxideinheiten zu mindestens 80 mol-%, vorzugsweise mindestens 90 mol-%, besonders bevorzugt ausschließlich aus Propylenoxideinheiten bestehen.

Geeignete Fettsäureesteralkohole C) sind beispielsweise Veresterungsprodukte hydroxyfunktioneller Fettsäuren, wie z. B. Hydroxyessigsäure, 3-Hydroxypropionsäure, Hydroxybuttersäure, 2-Hydroxybernsteinsäure (Äpfelsäure), 2,3-Dihydroxybernsteinsäure (Weinsäure), 2-Hydroxy-1,2,3-propan-tricarbonsäure (Citronensäure), Hydroxystearinsäure, Ricinolsäure, Salicylsäure und Mandelsäure, mit Alkoholen, wie z. B. Methanol, Ethanol, n-Propanol, Isopropanol, n-Butanol, Isobutanol, sec-Butanol, den isomeren Pentanolen, Hexanolen, Octanolen und Nonanolen, n-Decanol oder n-Dodecanol, bei denen die Summe der Kohlenstoffatome von Fettsäure und Veresterungsalkohol mindestens 8 beträgt.

Hydrophobe Verbindungen C) kommen, falls überhaupt, beim erfindungsgemäßen Verfahren in Mengen von bis zu 30 Gew.-%, vorzugsweise bis zu 20 Gew.-%, besonders bevorzugt bis zu 10 Gew.-%, bezogen auf das Ausgangspolyisocyanat A) zum Einsatz.

Beim erfindungsgemäßen Verfahren können gegebenenfalls weitere Hilfs- und Zusatzstoffe D), wie z. B. Antioxidantien und/oder Katalysatoren zum Einsatz kommen.

Geeignete Antioxidantien D) sind beispielsweise die aus der Kunststoffchemie an sich bekannten antioxidativ wirkenden Verbindungen, wie z. B. bevorzugt sterisch gehinderte Phenole und/oder di- oder trisubstituierte Phosphite.

Geeignete sterisch gehinderte Phenole D) sind beispielsweise 2,6-Di-tert-butylphenol, 2,4-Dimethyl-6-tert-butylphenol, 2,6-Di-tert-butyl-4-methylphenol, Triethylenglykol-bis(3-tert-butyl-4-hydroxy-5-methylphenyl)propionat, Octadecyl-3-(3,5-di-tert-butyl-4-hydroxyphenyl)-propionat, Pentaerythrit-tetrakis(3-(3,5-di-tert-butyl-4-hydroxy-phenyl)propionat), Ester der 3-(3,5-Di-tert-butyl-4-hydroxyphenyl)propionsäure mit aliphatischen verzweigten C7- bis C9-Alkoholen, wie z. B. Isoheptyl-3-(3,5-di-tert-butyl-4-hydroxyphenyl)propionat, Isooctyl-3-(3,5-di-tert-butyl-4-hydroxyphenyl)propionat oder Isononyl-3-(3,5-di-tert-butyl-4-hydroxyphenylpropionat, Isotridecyl-3-(3,5-di-tert-butyl-4-hydroxyphenyl)propionat, Thiodiethyl-bis[3-(3,5-di-tert-butyl-4-hydroxyphenyl)propionat], N,N'-Hexamethylen-bis(3,5-di-tert-butyl-4-hydroxyphenyl)propionsäureamid, 1,2-Bis(3,5-di-tert-butyl-4-hydroxyphenylpropionsäurD)hydrazid, 2,4-Di-tert-butylphenyl-4'-hydroxy-3',5'-di-tert-butylbenzoat, Ester der (3,5-di-tert-butyl-4-hydroxyphenyl)methylthioessigsäure mit aliphatischen verzweigten C10- bis C14-Alkoholen, 2,2'-Thio-bis(4-methyl-6-tert-butylphenol), 2-Methyl-4,6-bis(octylthiomethyl)phenol, 1,3,5-Trimethyl-2,4,6-Tris(3,5-di-tert-butyl-4-hydroxybenzyl)benzol, Tris(3,5-di-tert-butyl-4-hydroxybenzyl)isocyanurat und 2,5-Di-tert-amylhydrochinon, die gegebenenfalls in Kombination mit Didodecyl-3,3'-thiodipropionat oder Dioctadecyl-3,3'-thiodipropionat eingesetzt werden.

Geeignete Phosphite D) sind beispielsweise di- oder vorzugsweise trisubstituierte Phosphite, wie z. B. Dibutylphosphit und Dibenzylphosphit, Triethylphosphit und Tributylphosphit. Vorzugsweise handelt es sich bei den Antioxidantien D) vom Phosphit-Typ aber um trisubstituierte Phosphite, bei denen mindestens einer der Substituenten einen gegebenenfalls substituierten aromatischen Rest mit 6 bis 18 Kohlenstoffatomen oder einen linearen oder verzweigten aliphatischen Rest mit 9 bis 18 Kohlenstoffatomen darstellt, beispielsweise um Arylphosphite, wie z. B. Triphenylphosphit, Tris(2,4-di-tert-butylphenyl)phosphit oder Tris(nonylphenyl)phosphit, Alkyl-arylphosphite, wie z. B. Diphenyl-isooctylphosphit, Diphenyl-isodecylphosphit, Diisodecyl-phenylphosphit, Diisooctyloctylphenylphosphit, Phenyl-neopentylglykolphosphit oder 2,4,6-Tri-tert.-butylphenyl-(2-butyl-2-ethyl-1,3-propandiol)phosphit, Alkylphosphite, wie z. B. Triisodecylphosphit, Trilaurylphosphit oder Tris(tridecyl)phosphit, oder aromatisch bzw. aliphatisch substituierte Diphosphite, wie z. B. Diisodecyl-pentaerythritdiphosphit, Distearyl-pentaerythritdiphosphit, Bis(2,4-di-tert.-butylphenyl)-pentaerythritdiphosphit oder Tetraphenyl-dipropylenglykoldiphosphit.

Bevorzugte Antioxidantien D) für das erfindungsgemäße Verfahren sind sterisch gehinderte Phenole, die 2,6-Di-tert-butyl-4-methylphenol-Strukturen enthalten, sowie trisubstituierte Phosphite, die mindestens einen linearen oder verzweigten aliphatischen Substituenten mit 10 bis 16 Kohlenstoffatomen oder einen Phenylrest tragen. Besonders bevorzugte Antioxidantien D) sind 2,6-Di-tert-butyl-4-methylphenol, Ester der 3-(3,5-Di-tert-butyl-4-hydroxyphenyl)propionsäure mit aliphatischen verzweigten C7- bis C9-Alkoholen, Octadecyl-3-(3,5-di-tert-butyl-4-hydroxyphenyl)-propionat, Triisodecylphosphit, Phenyldiisodecylphospit und/oder Diphenylisodecylphospit.

Ganz besonders bevorzugte Antioxidantien D) für das erfindungsgemäße Verfahren sind 2,6-Di-tert-butyl-4-methylphenol und Ester der 3-(3,5-Di-tert-butyl-4-hydroxyphenyl)propionsäure mit aliphatischen verzweigten C7- bis C9-Alkoholen.

Falls überhaupt, kommen Antioxidantien D) beim erfindungsgemäßen Verfahren sowohl einzeln als auch in beliebigen Kombinationen untereinander in Mengen von 0,001 bis 3,0 Gew. %, bevorzugt 0,002 bis 2,0 Gew.-%, besonders bevorzugt von 0,005 bis 1,0 Gew.-%, ganz besonders bevorzugt von 0,01 bis 0,5 Gew.-%, berechnet als Gesamtmenge an eingesetzten Antioxidantien, bezogen auf die Menge an Ausgangspolyisocyanat A), zum Einsatz.

Die Antioxidantien D) können dabei in der oben angegebenen Menge einem oder mehreren der Reaktionspartner, dem mindestens einen Polyisocyanat A), der gegebenenfalls neutralisierten mindestens einen monosubstituierten Phosphinsäure B) und/oder den gegebenenfalls mitzuverwendenden nichtionisch hydrophilen oder hydrophoben Verbindungen C) bereits vor Beginn der eigentlichen Umsetzung zugemischt werden. Sie können aber auch zu jedem beliebigen Zeitpunkt während des Zudosierens der Reaktionspartner oder auch im Anschluss daran, vorzugsweise zu Beginn des Zudosierens, dem Reaktionsgemisch zugegeben werden.

Falls überhaupt, wird das Antioxidans D) bevorzugt vor Beginn der Umsetzung des mindestens einen Polyisocyanates A) zugesetzt.

Zur Durchführung des erfindungsgemäßen Verfahrens werden die Ausgangskomponenten A), B) und gegebenenfalls C), gegebenenfalls in Gegenwart weiterer Hilfs- und Zusatzstoffe D), bei Temperaturen von 0 bis 150 °C, vorzugsweise 20 bis 100 °C, besonders bevorzugt 30 bis 80°C, unter Einhaltung eines Äquivalent-Verhältnisses von NCO-Gruppen zu gegenüber NCO-Gruppen reaktiven Gruppen von 2:1 bis 400:1, vorzugsweise von 4:1 bis 250:1, vorzugsweise bis zum Erreichen des theoretisch errechneten NCO-Gehalts miteinander umgesetzt, wobei der Verlauf der Umsetzung durch z. B. titrimetrische Bestimmung des NCO-Gehaltes verfolgt werden kann.

Die Reaktion der Komponenten A), B) und gegebenenfalls C) verläuft in der Regel auch unkatalysiert sehr schnell. Zur weiteren Beschleunigung der Umsetzung können jedoch beim erfindungsgemäßen Verfahren gegebenenfalls auch übliche aus der Polyurethanchemie bekannten Katalysatoren als weitere Hilfs- und Zusatzstoffe D) mitverwendet werden, beispielsweise weitere tert. Amine wie Triethylamin, Pyridin, Methylpyridin, Benzyldimethylamin, N,N-Endoethylenpiperazin, N-Methylpiperidin, Pentamethyldiethylentriamin, N,N-Dimethylaminocyclohexan, N,N'-Dimethylpiperazin oder Metallsalze wie Eisen(III)-chlorid, Aluminium-tri(ethylacetoacetat), Zinkchlorid, Zink(II)-n-octanoat, Zink(II)-2-ethyl-1-hexanoat, Zink(II)-2-ethylcaproat, Zink(II)-stearat, Zink(II)-naphthenat, Zink(II)-acetylacetonat, Zinn(II)-n-octanoat, Zinn(II)-2-ethyl-1-hexanoat, Zinn(II)-ethylcaproat, Zinn(II)-laurat, Zinn(II)-palmitat, Dibutylzinn(IV)-oxid, Dibutylzinn(IV)-dichlorid, Dibutylzinn(IV)-diacetat, Dibutylzinn(IV)-dimaleat, Dibutylzinn(IV)-dilaurat, Dioctylzinn(IV)-diacetat, Molybdänglykolat oder beliebige Gemische solcher Katalysatoren.

Diese Katalysatoren D) kommen beim erfindungsgemäßen Verfahren, falls überhaupt, in einer Menge von 0,001 bis 2 Gew.-%, vorzugsweise 0,005 bis 0,5 Gew.-%, bezogen auf das Gesamtgewicht der Reaktionspartner zum Einsatz.

Das erfindungsgemäße Verfahren wird vorzugsweise lösemittelfrei durchgeführt. Gegebenenfalls können aber auch geeignete, gegenüber den reaktiven Gruppen der Ausgangskomponenten, insbesondere gegenüber Isocyanatgruppen inerte Lösemittel mitverwendet werden. Geeignete Lösemittel sind beispielsweise die an sich bekannten üblichen Lacklösemittel, wie z. B. Ethylacetat, Butylacetat, Ethylenglykolmonomethyl- oder -ethyletheracetat, 1-Methoxypropyl-2-acetat, 3-Methoxy-n-butylacetat, Aceton, 2-Butanon, 4-Methyl-2-pentanon, Cyclohexanon, Toluol, Xylol, Chlorbenzol, Testbenzin, höher substituierte Aromaten, wie sie beispielsweise unter den Bezeichnungen Solventnaphtha, Solvesso^{®}, Isopar^{®}, Nappar^{®} (Deutsche EXXON CHEMICAL GmbH, Köln, DD) und Shellsol^{®} (Deutsche Shell Chemie GmbH, Eschborn, DD) im Handel sind, Kohlensäureester, wie Dimethylcarbonat, Diethylcarbonat, 1,2-Ethylencarbonat und 1,2-Propylencarbonat, Lactone, wie β-Propiolacton, γ-Butyrolacton, ε-Caprolacton und ε-Methylcaprolacton, aber auch Lösemittel wie Propylenglykoldiacetat, Diethylenglykoldimethylether, Dipropylenglykoldimethylether, Butylglykolacetat, Butyldiglykolacetat, 1,3-Dioxolan, N-Methylpyrrolidon und N-Methylcaprolactam, oder beliebige Gemische solcher Lösemittel.

Nach dem erfindungsgemäßen Verfahren ist ein ionisch modifiziertes Polyisocyanatgemisch, enthaltend eine oder mehrere Isocyanatgruppen und eine oder mehrere P-substituierte Carbamoylphospinatstrukturen erhältlich oder wird dadurch erhalten.

Vorzugsweise erhält man P-substituierte Carbamoylphosphinatgruppen der allgemeinen Formel (II) 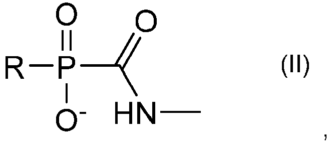 in welcher R nicht Wasserstoff ist und vorzugsweise für einen beliebigen gesättigten oder ungesättigten, linearen oder verzweigten, aliphatischen Rest mit 1 bis 18 Kohlenstoffatomen, gesättigten oder ungesättigten cycloaliphatischen Rest mit 5 bis 18 Kohlenstoffatomen, araliphatischen Rest mit 7 bis 18 Kohlenstoffatomen und/oder aromatischen Rest mit 6 bis 18 Kohlenstoffatomen steht, der jeweils substituiert oder unsubstituiert ist und/oder Heteroatome in der Kette aufweist, enthaltende Polyisocyanate mit NCO-Gehalten bestimmt nach DIN EN ISO 11909:2007-05 von 5,8 bis 25,9 Gew.-%, besonders bevorzugt 7,8 bis 24,9 Gew.-%, ganz besonders bevorzugt 9,7 bis 23,9 Gew.-%, bezogen auf das Gesamtgewicht der Polyisocyanate, oder sie werden vorzugsweise durch das erfindungsgemäße Verfahren hergestellt.

Vorzugsweise steht R in der allgemeinen Formel (II) für einen beliebigen gesättigten oder ungesättigten, linearen oder verzweigten, aliphatischen Rest mit 1 bis 18 Kohlenstoffatomen, der substituiert oder unsubstituiert ist und/oder Heteroatome in der Kette aufweist, und/oder für einen gesättigten oder ungesättigten cycloaliphatischen Rest mit 5 bis 18 Kohlenstoffatomen, der substituiert oder unsubstituiert ist und/oder Heteroatome in der Kette aufweist, und/oder für einen araliphatischen Rest mit 7 bis 18 Kohlenstoffatomen, der substituiert oder unsubstituiert ist und/oder Heteroatome in der Kette aufweist, und/oder für einen aromatischen Rest mit 6 bis 18 Kohlenstoffatomen, der jeweils substituiert oder unsubstituiert ist und/oder Heteroatome in der Kette aufweist.

Besonders bevorzugt steht der Rest R in der allgemeinen Formel (II) für einen gegebenenfalls substituierten aliphatischen oder gegebenenfalls substituierten aromatischen Rest, besonders bevorzugt für einen gegebenenfalls substituierten aromatischen Rest.

In einer weiteren bevorzugten Ausführungsform ist die eine oder mehrere P-substituierte Carbamoylphosphinatstruktur eine der allgemeinen Formel (III) 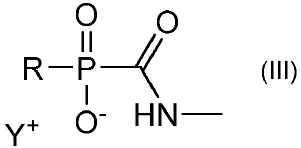 in welcher
R für einen beliebigen gesättigten oder ungesättigten, linearen oder verzweigten, aliphatischen Rest mit 1 bis 18 Kohlenstoffatomen, gesättigten oder ungesättigten cycloaliphatischen Rest mit 5 bis 18 Kohlenstoffatomen, araliphatischen Rest mit 7 bis 18 Kohlenstoffatomen und/oder aromatischen Rest mit 6 bis 18 Kohlenstoffatomen steht, der jeweils substituiert oder unsubstituiert ist und/oder Heteroatome in der Kette aufweist und
Y+ für ein Alkalikation oder ein protoniertes tertiäres Amin steht.

Vorzugsweise steht R in der allgemeinen Formel (III) für einen beliebigen gesättigten oder ungesättigten, linearen oder verzweigten, aliphatischen Rest mit 1 bis 18 Kohlenstoffatomen, der substituiert oder unsubstituiert ist und/oder Heteroatome in der Kette aufweist, und/oder für einen gesättigten oder ungesättigten cycloaliphatischen Rest mit 5 bis 18 Kohlenstoffatomen, der substituiert oder unsubstituiert ist und/oder Heteroatome in der Kette aufweist, und/oder für einen araliphatischen Rest mit 7 bis 18 Kohlenstoffatomen, der substituiert oder unsubstituiert ist und/oder Heteroatome in der Kette aufweist, und/oder für einen aromatischen Rest mit 6 bis 18 Kohlenstoffatomen, der jeweils substituiert oder unsubstituiert ist und/oder Heteroatome in der Kette aufweist.

Es ist weiter bevorzugt, dass das erfindungsgemäße ionisch modifizierte Polyisocyanatgemisch einen Gehalt an P-substituierten Carbamoylphosphinatstrukturen (berechnet als O₂PCONH, Molekulargewicht = 106 g/mol) von 0,10 bis 33,1 Gew.-%, bevorzugt von 0,17 bis 19,8 Gew.-%, besonders bevorzugt von 0,33 bis 13,2 Gew.-%, bezogen auf das Gesamtgewicht des Polyisocyanatgemisches, aufweist.

Ein weiterer Gegenstand der Erfindung ist ein mit monosubstituierten Phosphinsäuren und/oder deren Salzen modifiziertes Polyisocyanat sowie ein ionisch modifiziertes Polyisocyanatgemisch, erhältlich oder hergestellt durch das erfindungsgemäße Verfahren.

Die erfindungsgemäßen Polyisocyanate lassen sich leicht, ohne Einsatz hoher Scherkräfte durch bloßes Einrühren in Wasser emulgieren. In Abhängigkeit von der Menge der eingebauten P-substituierten Carbamoylphosphinatgruppen können wässrige Dispersionen der erfindungsgemäßen Verfahrensprodukte mittlere Teilchengröße über einen sehr breiten Bereich, von beispielsweise weniger als 100 nm bis größer als 2000 nm, aufweisen. Während die Verwendung von feinteilig dispergierbaren Polyisocyanaten als Vernetzkomponente in wässrigen Lacksystemen zu völlig transparenten, hochglänzenden Beschichtungen führt, werden mit grobteilig dispergierbaren Vernetzern in der Regel völlig matte oder seidenmatte Lacke erhalten. Die Verwendung von erfindungsgenmäßen Polyisocyanaten mit unterschiedlichen Modifizierungsgrades erlaubt es so auf einfache Weise den Glanz von Beschichtungen gezielt einzustellen.

Gegenstand der Erfindung ist daher auch die Verwendung von mit monosubstituierten Phosphinsäuren und/oder deren Salzen modifizierten Polyisocyanaten als Ausgangskomponenten bei der Herstellung von Polyurethankunststoffen, insbesondere als Vernetzer für wasserlösliche oder -dispergierbare Lackbindemittel oder Lackbindemittelkomponenten mit gegenüber Isocyanatgruppen reaktionsfähigen Gruppen bei der Herstellung von Überzügen unter Verwendung von wässrigen Beschichtungsmitteln auf Basis derartiger Bindemittel oder Bindemittelkomponenten.

Bei der Verwendung als Vernetzerkomponente für wässrige Zweikomponentensysteme können den erfindungsgemäßen P-substituierte Carbamoylphosphinatgruppen enthaltenden Polyisocyanaten gegebenenfalls vor der Emulgierung in die wässrige Phase beliebige weitere nichthydrophilierte Polyisocyanate, beispielsweise solche der als geeignete Ausgangspolyisocyanate A) genannten Art, zugesetzt werden, wodurch Polyisocyanatgemische erhalten werden, die ebenfalls erfindungsgemäße Polyisocyanatgemische darstellen, da diese im allgemeinen aus Gemischen aus
(i) erfindungsgemäß mit P-substituierten Carbamoylphosphinatgruppen hydrophil modifizierten Polyisocyanaten und
(ii) unmodifizierten Polyisocyanaten der beispielhaft genannten Art bestehen.

In solchen Mischungen übernehmen die erfindungsgemäßen P-substituierte Carbamoylphosphinatgruppen enthaltenden Polyisocyanate die Funktion eines Emulgators für den nachträglich zugemischten Anteil an nichthydrophilen Polyisocyanaten.

Besonders bevorzugt werden die erfindungsgemäßen P-substituierte Carbamoylphosphinatgruppen enthaltenden Polyisocyanatgemische als Vernetzer für in Wasser gelöste oder dispergierte Lackbindemittel oder Lackbindemittelkomponenten mit gegenüber Isocyanatgruppen reaktionsfähigen Gruppen, insbesondere alkoholischen Hydroxylgruppen, bei der Herstellung von Beschichtungen unter Verwendung von wäßrigen Beschichtungsmitteln auf Basis derartiger Bindemittel bzw. Bindemittelkomponenten verwendet. Die Vereinigung des Vernetzers, gegebenenfalls in emulgierter Form, mit den Bindemitteln bzw. Bindemittelkomponenten kann hierbei durch einfaches Verrühren vor der Verarbeitung der Beschichtungsmittel nach beliebigen Methoden oder auch unter Verwendung von Zweikomponenten-Spritzpistolen erfolgen.

In diesem Zusammenhang seien als Lackbindemittel oder Lackbindemittelkomponenten beispielhaft erwähnt: in Wasser gelöste oder dispergierte, Hydroxylgruppen aufweisende Polyacrylate, insbesondere solche des Molekulargewichtsbereichs 1 000 bis 20 000, die mit organischen Polyisocyanaten als Vernetzer wertvolle Zweikomponenten-Bindemittel darstellen oder in Wasser dispergierte, gegebenenfalls Urethan-modifizierte, Hydroxylgruppen aufweisende Polyesterharze der aus der Polyester- und Alkydharzchemie bekannten Art. Prinzipiell sind als Reaktionspartner für die erfindungsgemäßen Polyisocyanatgemische alle in Wasser gelösten oder dispergierten Bindemittel, die gegenüber Isocyanaten reaktive Gruppen aufweisen, geeignet. Hierzu zählen beispielsweise auch in Wasser dispergierte Polyurethane oder Polyharnstoffe, die aufgrund der in den Urethan- bzw. Harnstoffgruppen vorliegenden aktiven Wasserstoffatome mit Polyisocyanaten vernetzbar sind.

Bei der erfindungsgemäßen Verwendung als Vernetzerkomponente für wäßrige Lackbindemittel werden die mit monosubstituierten Phosphinsäuren und/oder deren Salzen modifizierten Polyisocyanate im allgemeinen in solchen Mengen eingesetzt, die einem Äquivalentverhältnis von NCO-Gruppen zu gegenüber NCO-Gruppen reaktionsfähigen Gruppen, insbesondere alkoholischen Hydroxylgruppen, von 0,5:1 bis 2:1 entsprechen.

Gegebenenfalls können die erfindungsgemäßen Polyisocyanatgemische in untergeordneten Mengen auch nichtfunktionellen wäßrigen Lackbindemitteln zur Erzielung ganz spezieller Eigenschaften, beispielsweise als Additiv zur Haftverbesserung zugemischt werden.

Selbstverständlich können die erfindungsgemäßen Polyisocyanatgemische auch in mit aus der Polyurethanchemie an sich bekannten Blockierungsmitteln blockierter Form in Kombination mit den obengenannten wäßrigen Lackbindemitteln oder Lackbindemittelkomponenten im Sinne von wäßrigen Einkomponenten-PUR-Einbrennsystemen eingesetzt werden. Geeignete Blockierungsmittel sind beispielsweise Malonsäurediethylester, Acetessigester, Acetonoxim, Butanonoxim, ε-Caprolactam, Diisopropylamin, 3,5-Dimethylpyrazol, 1,2,4-Triazol, Dimethyl-1,2,4-triazol, Imidazol oder beliebige Gemische dieser Blockierungsmittel.

Als Untergründe für die mit Hilfe der erfindungsgemäßen P-substituierte Carbamoylphosphinatgruppen enthaltenden Polyisocyanatgemische formulierten wäßrigen Beschichtungen kommen beliebige Substrate in Betracht, wie z. B. Metall, Holz, Glas, Stein, keramische Materialien, Beton, harte und flexible Kunststoffe, Textilien, Leder und Papier, die vor der Beschichtung gegebenenfalls auch mit üblichen Grundierungen versehen werden können.

Im Allgemeinen besitzen die mit den erfindungsgemäßen Polyisocyanatgemischen formulierten wäßrigen Beschichtungsmittel, denen gegebenenfalls die auf dem Lacksektor üblichen Hilfs- und Zusatzmittel, wie z. B. Verlaufshilfsmittel, Farbpigmente, Füllstoffe, Mattierungsmittel oder Emulgatoren, einverleibt werden können, schon bei Raumtemperaturtrocknung gute lacktechnische Eigenschaften.

Selbstverständlich lassen sie sich jedoch auch unter forcierten Bedingungen bei erhöhter Temperatur bzw. durch Einbrennen bei Temperaturen bis 260 °C trocknen.

Ebenfalls Gegenstand der Erfindung ist ein Zwei-Komponenten-System, umfassend eine Komponente A), enthaltend mindestens ein erfindungsgemäßes Polyisocyanatgemisch, und eine Komponente B), enthaltend mindestens ein Lackbindemittel oder eine Lackbindemittelkomponente mit gegenüber Isocyanatgruppen reaktionsfähigen Gruppen.

Auch ein Verfahren zur Beschichtung von Substraten oder zur Herstellung von beschichteten Artikeln, umfassend Auftragen und Aushärten, gegebenenfalls unter Wärmeeinwirkung, mindestens eines erfindungsgemäßen Beschichtungsmittels oder erfindungsgemäßen Zwei-Komponenten-Systems.

Ein weiterer Gegenstand der vorliegenden Erfindung ist ein Substrat, beschichtet mit einem gegebenenfalls unter Wärmeeinwirkung ausgehärteten erfindungsgemäßen Beschichtungsmittel. Aufgrund ihrer hervorragenden Wasseremulgierbarkeit, die eine homogene, besonders feinteilige Verteilung in wäßrigen Lackbindemitteln ermöglicht, führt die Verwendung der erfindungsgemäßen Polyisocyanatgemische als Vernetzerkomponente für wäßrige Polyurethanlacke zu Beschichtungen mit hervorragenden optischen Eigenschaften, insbesondere hohem Oberflächenglanz, Verlauf und hoher Transparenz.

Neben der bevorzugten Verwendung als Vernetzerkomponenten für wäßrige 2K-PUR-Lacke eignen sich die erfindungsgemäßen P-substituierte Carbamoylphosphinatgruppen enthaltenden Polyisocyanatgemische hervorragend als Vernetzer für wäßrige Dispersionsklebstoffe, Leder- und Textilbeschichtungen oder Textildruckpasten, als AOX-freie Papierhilfsmittel oder auch als Zusatzmittel für mineralische Baustoffe, beispielsweise Beton- oder Mörtelmassen.

### Ausführungsformen:

Die vorliegende Erfindung betrifft insbesondere die folgenden Ausführungsformen:
Nach einer ersten Ausführungsform betrifft die Erfindung ein ionisch modifiziertes Polyisocyanatgemisch, enthaltend eine oder mehrere Isocyanatgruppen und eine oder mehrere P-substituierte Carbamoylphospinatstrukturen, wobei P-substituiert bedeutet, dass der Substituent am Phosphoratom der Carbamoylphosphinatstruktur von Wasserstoff verschieden ist.

Nach einer zweiten Ausführungsform betrifft die Erfindung ein ionisch modifiziertes Polyisocyanatgemisch gemäß Ausführungsform 1, dadurch gekennzeichnet, dass es zusätzlich eine oder mehrere Isocyanurat-, Allophanat-, Urethan-, Harnstoff-, Uretdion-, Iminooxadiazindion-, Oxadiazintrion- und/oder Biuretstruktur enthält.

Nach einer dritten Ausführungsform betrifft die Erfindung ein ionisch modifiziertes Polyisocyanatgemisch gemäß Ausführungsform 1 oder 2, dadurch gekennzeichnet, dass es einen nach DIN EN ISO 11909:2007-05 bestimmten NCO-Gehalt von 5,8 bis 25,9 Gew.-%, vorzugsweise von 7,8 bis 24,9 Gew,-%, besonders bevorzugt von 9,7 bis 23,9 Gew.-%, bezogen auf das Gesamtgewicht des Polyisocyanatgemisches, aufweist.

Nach einer vierten Ausführungsform betrifft die Erfindung ein ionisch modifiziertes Polyisocyanatgemisch gemäß einer der vorstehenden Ausführungsformen, dadurch gekennzeichnet, dass es einen nach DIN EN ISO 10283:2007-11 gaschromatographisch mit internem Standard gemessenen Rest-Monomeren Gehalt von weniger als 0,14 Gew.-%, bevorzugt weniger als 0,12 Gew.-% und besonders bevorzugt weniger als 0,10 Gew.-%, bezogen auf das Gesamtgewicht des Polyisocyanatgemisches, aufweist.

Nach einer fünften Ausführungsform betrifft die Erfindung ein ionisch modifiziertes Polyisocyanatgemisch gemäß einer der vorstehenden Ausführungsformen, dadurch gekennzeichnet, dass die P-substituierte Carbamoylphosphinatstruktur eine der allgemeinen Formel (III) 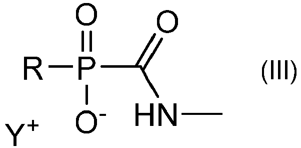 ist, in welcher
R für einen beliebigen gesättigten oder ungesättigten, linearen oder verzweigten, aliphatischen Rest mit 1 bis 18 Kohlenstoffatomen, gesättigten oder ungesättigten cycloaliphatischen Rest mit 5 bis 18 Kohlenstoffatomen, araliphatischen Rest mit 7 bis 18 Kohlenstoffatomen und/oder aromatischen Rest mit 6 bis 18 Kohlenstoffatomen steht, der jeweils substituiert oder unsubstituiert ist und/oder Heteroatome in der Kette aufweist und
Y+ für ein Alkalikation oder ein protoniertes tertiäres Amin steht.

Nach einer sechsten Ausführungsform betrifft die Erfindung ein ionisch modifiziertes Polyisocyanatgemisch gemäß einer der vorstehenden Ausführungsformen, dadurch gekennzeichnet, dass die P-substituierte Carbamoylphosphinatstruktur eine der allgemeinen Formel (III) 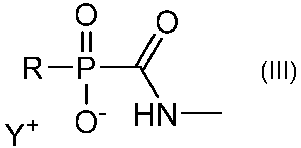 ist, in welcher
R für einen gegebenenfalls substituierten aromatischen Rest mit 6 bis 18 Kohlenstoffatomen, bevorzugt für Phenyl, und
Y+ für ein Alkalikation oder ein protoniertes tertiäres Amin, bevorzugt für ein protoniertes tertiäres Amin, besonders bevorzugt für jeweils protoniertes Triethylamin, N,N-Dimethylbutylamin, N,N-Diethylmethylamin, N,N-Diisopropylethylamin, N,N-Dimethylcyclohexylamin, N-Methylpiperidin, N-Ethylmorpholin oder einem beliebigen Gemisch der vorgenannten protonierten tertiären Amine steht.

Nach einer siebten Ausführungsform betrifft die Erfindung ein ionisch modifiziertes Polyisocyanatgemisch gemäß einer der vorstehenden Ausführungsformen, dadurch gekennzeichnet, dass es einen Gehalt an P-substituierten Carbamoylphosphinatstrukturen (berechnet als O₂PCONH, Molekulargewicht = 106 g/mol) von 0,10 bis 33,1 Gew.-%, bevorzugt von 0,17 bis 19,8 Gew.-%, besonders bevorzugt von 0,33 bis 13,2 Gew.-%, bezogen auf das Gesamtgewicht des Polyisocyanatgemisches, aufweist.

Nach einer achten Ausführungsform betrifft die Erfindung ein ionisch modifiziertes Polyisocyanatgemisch gemäß einer der Ausführungsformen eins bis vier, dadurch gekennzeichnet, dass die P-substituierte Carbamoylphosphinatstruktur eine der allgemeinen Formel (III) 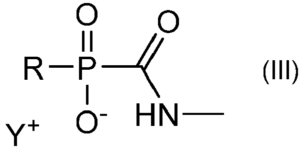 ist, in welcher
R für Phenyl, und
Y+ für ein Alkalikation oder ein protoniertes tertiäres Amin, bevorzugt für ein protoniertes tertiäres Amin, besonders bevorzugt für jeweils protoniertes Triethylamin, N,N-Dimethylbutylamin, N,N-Diethylmethylamin, N,N-Diisopropylethylamin, N,N-Dimethylcyclohexylamin, N-Methylpiperidin, N-Ethylmorpholin oder einem beliebigen Gemisch der vorgenannten protonierten tertiären Amine steht und das ionisch modifizierte Polyisocyanatgemisch einen Gehalt an P-substituierten Carbamoylphosphinatstrukturen (berechnet als O₂PCONH, Molekulargewicht = 106 g/mol) von 0,22 bis 18,6 Gew.-%, bevorzugt von 0,37 bis 11,2 Gew.-%, besonders bevorzugt von 0,75 bis 7,4 Gew.-%, bezogen auf das Gesamtgewicht des Polyisocyanatgemisches, aufweist.

Nach einer neunten Ausführungsform betrifft die Erfindung ein mit monosubstituierten Phosphinsäuren und/oder deren Salzen modifiziertes Polyisocyanat.

Nach einer zehnten Ausführungsform betrifft die Erfindung ein Verfahren zur Herstellung eines modifizierten Polyisocyanats gemäß einer der vorstehenden Ausführungsformen, umfassend eine Umsetzung von
1) mindestens einem Polyisocyanat A) mit
2) mindestens einer monosubstituierten Phosphinsäure B), wobei die Phosphinsäuregruppen zumindest anteilig vor, während und/oder im Anschluß an die Umsetzung von A) mit B) neutralisiert werden, und
3) gegebenenfalls mit mindestens einer nichtionisch hydrophilen oder hydrophoben organischen Verbindung C), die mindestens eine gegenüber Isocyanaten reaktive Gruppe aufweisen, und
4) gegebenenfalls in Gegenwart weiterer Hilfs- und Zusatzstoffe D).

Nach einer elften Ausführungsform betrifft die Erfindung ein Verfahren gemäß Ausführungsform 10, dadurch gekennzeichnet, dass das mindestens eine Polyisocyanat A) aliphatisch, cycloaliphatisch, araliphatisch und/oder aromatisch gebundene Isocyanatgruppen aufweist.

Nach einer zwölften Ausführungsform betrifft die Erfindung ein Verfahren gemäß Ausführungsform 9 bis 11, dadurch gekennzeichnet, dass das mindestens eine Polyisocyanat A) einen Gehalt an monomeren Diisocyanaten von weniger als 0,14 Gew.-%, vorzugsweise weniger als 0,12 Gew.-%, besonders bevorzugt von weniger als 0,10 Gew.-%, bezogen auf das Gesamtgewicht des Polyisocyanatgemisches, aufweist.

Nach einer dreizehnten Ausführungsform betrifft die Erfindung ein Verfahren gemäß einer der Ausführungsformen 9 bis 12, dadurch gekennzeichnet, dass das mindestens eine Polyisocyanat A) ein oder mehrere Isocyanuratstrukturen enthaltende Polyisocyanate auf Basis von 1,5-Diisocyanatopentan, 1,6-Diisocyanatohexan, 1-Isocyanato-3,3,5-trimethyl-5-isocyanatomethylcyclohexan, 1,3-Bis(isocyanatomethyl)-benzol, Bis-(isocyanatomethyl)-norbornan und/oder 4,4'-Diiso-cyanatodicyclohexylmethan umfasst.

Nach einer vierzehnten Ausführungsform betrifft die Erfindung ein Verfahren gemäß einer der Ausführungsformen 9 bis 13, dadurch gekennzeichnet, dass die mindestens eine monosubstituierte Phosphinsäure B), eine der allgemeinen Formel (I) 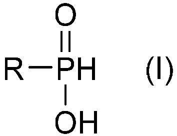 ist, in welcher R für einen beliebigen gesättigten oder ungesättigten, linearen oder verzweigten, aliphatischen Rest mit 1 bis 18 Kohlenstoffatomen, gesättigten oder ungesättigten cycloaliphatischen Rest mit 5 bis 18 Kohlenstoffatomen, araliphatischen Rest mit 7 bis 18 Kohlenstoffatomen und/oder aromatischen Rest mit 6 bis 18 Kohlenstoffatomen steht, der jeweils substituiert oder unsubstituiert ist und/oder Heteroatome in der Kette aufweist, vorzugsweise in welcher R für einen gegebenenfalls substituierten aromatischen Rest mit 6 bis 18 Kohlenstoffatomen steht.

Nach einer fünfzehnten Ausführungsform betrifft die Erfindung ein Verfahren gemäß einer der Ausführungsformen 9 bis 14, dadurch gekennzeichnet, dass es sich bei der monosubstituierten Phosphinsäure B) um Phenylphosphinsäure handelt.

Nach einer sechzehnten Ausführungsform betrifft die Erfindung ein Verfahren gemäß einer der Ausführungsformen 9 bis 15, dadurch gekennzeichnet, dass die mindestens eine monosubstituierte Phosphinsäure B) in einer Menge von 0,3 bis 25,0 Gew.-%, bevorzugt von 0,5 bis 15,0 Gew.-%, besonders bevorzugt von 1,0 bis 10,0 Gew.-%, bezogen auf das Gesamtgewicht der Verbindungen A) und B), zum Einsatz kommt.

Nach einer siebzehnten Ausführungsform betrifft die Erfindung ein Verfahren gemäß einer der Ausführungsformen 9 bis 16, dadurch gekennzeichnet, dass die mindestens eine monosubstituierte Phosphinsäure B) zumindest anteilig vor, während und/oder im Anschluß an die Umsetzung von A) mit B) mit einem tertiären Amin neutralisiert wird.

Nach einer achtzehnten Ausführungsform betrifft die Erfindung ein Verfahren gemäß einer der Ausführungsformen 9 bis 17, dadurch gekennzeichnet, dass die mindestens eine monosubstituierte Phosphinsäure B) zumindest anteilig vor, während und/oder im Anschluß an die Umsetzung von A) mit B) mit Triethylamin, N,N-Dimethylbutylamin, N,N-Diethylmethylamin, N,N-Diisopropylethylamin, N,N-Dimethylcyclohexylamin, N-Methylpiperidin, N-Ethylmorpholin oder einem beliebigen Gemisch der vorgenannten tertiären Amine neutralisiert wird.

Nach einer neunzehnten Ausführungsform betrifft die Erfindung ein Verfahren gemäß einer der Ausführungsformen 9 bis 18, dadurch gekennzeichnet, dass das tertiäre Amin in einer Menge zum Einsatz kommt, die einem Äquivalentverhältnis von Neutralisationsmittel zu Phosphinsäure-gruppen der Komponente B) von 0,2 bis 2,0, vorzugsweise von 0,5 bis 1,5, besonders bevorzugt 0,95 bis 1,05 entspricht.

Nach einer zwanzigsten Ausführungsform betrifft die Erfindung ein Verfahren gemäß einer der Ausführungsformen 9 bis 19, dadurch gekennzeichnet, dass die mindestens eine nichtionisch hydrophile oder hydrophobe organische Verbindung C) reine Polyethylenglycolmonomethyletheralkohole umfasst, die im statistischen Mittel 5 bis 50, ganz besonders bevorzugt 5 bis 25 Ethylenoxideinheiten aufweisen oder aliphatische Alkohole oder Fettsäureesteralkohole mit jeweils mindestens 8 Kohlenstoffatomen.

Nach einer einundzwanzigsten Ausführungsform betrifft die Erfindung ein ionisch modifiziertes Polyisocyanatgemisch, erhältlich oder hergestellt durch ein Verfahren gemäß einer der Ausführungsformen 9 bis 20.

Nach einer zweiundzwanzigsten Ausführungsform betrifft die Erfindung eine Verwendung mindestens eines ionisch modifizierten Polyisocyanatgemisches gemäß einem der Ausführungsformen 1 bis 8 und/oder mindestens eines ionisch modifizierten Polyisocyanatgemisches gemäß Ausführungsform 21 als Ausgangskomponente bei der Herstellung von Polyurethan- und/oder Polyharnstoffkunststoffen.

Nach einer dreiundzwanzigsten Ausführungsform betrifft die Erfindung ein Beschichtungsmittel enthaltend mindestens ein ionisch modifiziertes Polyisocyanat, erhältlich oder hergestellt durch ein Verfahren gemäß einer der Ausführungsformen 9 bis 20, und/oder enthaltend mindestens ein ionisch modifiziertes Polyisocyanatgemisch gemäß einer der Ausführungsformen 1 bis 8.

Nach einer vierundzwanzigsten Ausführungsform betrifft die Erfindung ein Substrat, zumindest anteilig beschichtet mit einem gegebenenfalls unter Wärmeeinwirkung ausgehärteten Beschichtungsmittel gemäß Ausführungsform 23.

Nach einer fünfundzwanzigsten Ausführungsform betrifft die Erfindung einen Artikel, umfassend ein Substrat gemäß Ausführungsform 24 oder einen zumindest anteilig mit einem Beschichtungsmittel gemäß Ausführungsform 23 Gegenstand.

### Beispiele

Alle Prozentangaben beziehen sich, soweit nichts Anderslautendes vermerkt, auf das Gewicht.

Die Bestimmung der NCO-Gehalte erfolgte titrimetrisch nach DIN EN ISO 11909:2007-05.

Sämtliche Viskositätsmessungen erfolgten mit einem Physica MCR 51 Rheometer der Fa. Anton Paar Germany GmbH (DD) nach DIN EN ISO 3219:1994-10 bei einer Scherrate von 250 s-1.

Die Rest-Monomeren Gehalte wurden nach DIN EN ISO 10283:2007-11 gaschromatographisch mit internem Standard gemessen.

Als Maß für die Emulgierbarkeit der hydrophilen Polyisocyanate dienen die mittleren Teilchengrößen (MTG) 25 %iger wässriger Emulsionen. Dazu wurden jeweils 25 g der erfindungsgemäßen Polyisocyanatgemisches in einem Erlenmeyerkolben mit 75 g entionisiertem Wasser, entsprechend einem Festkörpergehalt von jeweils 25 Gew.-%, versetzt und anschließend jeweils 1 min mit Hilfe eines Magnetrührers bei 900 U/min gerührt. Anschließend wurden die mittlere Teilchengrößen [nm] der auf diese Weise erhaltenen wässrigen Emulsionen mit einem Zetasizer, Typ DTS 5100, der Fa. Malvern Instruments GmbH (DD) bestimmt. Je kleiner die mittlere Teilchengröße, desto je feiner die Verteilung eines Vernetzers in der wäßrigen Phase (Lackbindemittel) und desto klarer und brillanter die erhältlichen Lackfilme.

### Ausgangsverbindungen

### Polyisocyanate A)

### Ausgangspolyisocyanat A1)

Isocyanuratgruppen enthaltendes HDI-Polyisocyanat, hergestellt durch katalytische Trimerisierung von HDI in Anlehnung an Beispiel 11 der EP-A 330 966, mit der Änderung, dass die Reaktion bei einem NCO-Gehalt der Rohmischung von 40 % durch Zugabe von Dibutylphosphat gestoppt wurde. Anschließend wurde nicht umgesetztes HDI durch Dünnschichtdestillation bei einer Temperatur von 130°C und einem Druck von 0,2 mbar abgetrennt.

| | |
|---|---|
| NCO-Gehalt: | 21,7 % |
| Monomeres HDI: | 0,1 % |
| Viskosität (23°C): | 3080 mPas |
| Farbzahl (Hazen): | 18 |

### Ausgangspolyisocyanat A2)

Isocyanuratgruppen enthaltendes IPDI-Polyisocyanat, hergestellt durch katalytische Trimerisierung von IPDI nach Beispiel 2 der EP-A-0 003 765. Die Reaktion wurde bei einem NCO-Gehalt der Rohmischung von 30,1 % durch Zugabe einer äquimolaren Menge an Dibutylphosphat, bezogen auf eingesetzte Katalysatormenge, und 30 minütiges Nachrühren bei 80°C deaktiviert. Anschließend wurde nicht umgesetztes IPDI durch Dünnschichtdestillation bei einer Temperatur von 170°C und einem Druck von 0,3 mbar abgetrennt und das erhaltene Festharz mit Butylacetat bis zu einem Festkörpergehalt von 70 % verdünnt.

| | |
|---|---|
| NCO-Gehalt: | 11,9 % |
| Monomeres IPDI: | 0,28 % |
| Viskosität (23°C): | 620 mPas |
| Farbzahl (Hazen): | 14 |

### Ausgangspolyisocyanat A3)

Isocyanuratgruppen enthaltendes PDI-Polyisocyanat, hergestellt durch katalytische Trimerisierung von PDI nach dem in der WO 2016/146579 für die Polyisocyanatkomponente A2) beschriebenen Verfahren. Die Reaktion wurde bei einem NCO-Gehalt der Rohmischung von 36,7 % durch Zugabe einer äquimolaren Menge an Dibutylphosphat, bezogen auf eingesetzte Katalysatormenge, und 30 minütiges Nachrühren bei 80°C deaktiviert. Anschließend wurde nicht umgesetztes PDI durch Dünnschichtdestillation bei einer Temperatur von 140°C und einem Druck von 0,5 mbar abgetrennt.

| | |
|---|---|
| NCO-Gehalt: | 21,8 % |
| monomeres PDI: | 0,09 % |
| Viskosität (23 °C): | 9850 mPas |
| Farbzahl (Hazen): | 34 |

### Ausgangspolyisocyanat A4)

Isocyanuratgruppen enthaltendes HDI-Polyisocyanat, hergestellt durch katalytische Trimerisierung von HDI in Anlehnung an Beispiel 11 der EP-A 330 966, mit der Änderung, dass als Katalysatorlösemittel 2-Ethylhexanol statt 2-Ethyl-1,3-hexandiol eingesetzt wurde und die Reaktion bei einem NCO-Gehalt der Rohmischung von 42,5 % durch Zugabe von Dibutylphosphat gestoppt wurde. Anschließend wurde nicht umgesetztes HDI durch Dünnschichtdestillation bei einer Temperatur von 130°C und einem Druck von 0,2 mbar abgetrennt.

Das Produkt wies folgende Kenndaten und Zusammensetzung auf:

| | |
|---|---|
| NCO-Gehalt: | 22,9 % |
| monomeres HDI: | 0,08 % |
| Viskosität (23°C): | 1210 mPas |
| Farbzahl (Hazen): | 10 |

### Ausgangspolyisocyanat A5)

Polyisocyanat, hergestellt in Anlehnung an Vergleichsbeispiel 2a der WO 2018/153801, durch Trimeriserung von HDI unter Verwendung einer 20 %-igen Lösung von 5-Azonia-spiro[4.5]decaniumhydrogendifluorid in 2-Ethylhexanol als Katalysator, Reaktionsstoppung bei einem NCO-Gehalt der Rohmischung von 44,8 % durch Zugabe einer zur Katalysatormenge äquivalenten Menge einer 70 %igen Lösung von Dodecylbenzolsulfonsäure in Isopropanol und anschließende Abtrennung des nicht umgesetzten HDI durch Dünnschichtdestillation bei einer Temperatur von 130°C und einem Druck von 0,2 mbar.

Das Produkt wies folgende Kenndaten und Zusammensetzung auf:

| | |
|---|---|
| NCO-Gehalt: | 23,5 % |
| monomeres HDI: | 0,11 % |
| Viskosität (23°C): | 720 mPas |
| Farbzahl (Hazen): | 49 |

### Phosphinsäuren B)

Phenylphosphinsäure (Sigma-Aldrich Chemie Gmbh, München, DE)
n-Butylphosphinsäure, hergestellt durch Hydrolyse von n-Butyldichlorphosphin nach dem Verfahren der EP-A 0 080 149.

### Beispiel 1 (erfindungsgemäß)

### Herstellung eines Phenylphosphinsäure/Dimethylcyclohexylamin-Salzes

255,4 g (2,0 mol) des Dimethylcyclohexylamin wurden bei 23°C unter trockenem Stickstoff vorgelegt und unter Rühren innerhalb von 20 min protionsweise mit 285,8 g (2,0 mol) Phenylphosphinsäure versetzt, wobei die Temperatur bis auf ca. 50°C anstieg. Nach beendeter Zugabe wurde das Reaktionsgemisch weitere 15 min ohne externes Heizen oder Kühlen gerührt und anschließend filtriert. Es wurde ein Phenylphosphinsäure/Dimethylcyclohexylamin-Salz (PPA/DMCA) in Form einer klaren, schwach gelben ionischen Flüssigkeit mit einer Viskosität (23°C) von 740 mPas erhalten.

### Herstellung eines ionisch hydrophilierten HDI-Trimerisats

Zu 480,0 g (2,48 val) des Isocyanuratgruppen-haltigen Ausgangspolyisocyanates A1) wurden bei 50°C unter Rühren und trockenem Stickstoff innerhalb von 20 Minuten 20,0 g (0,074 mol) des flüssigen Phenylphosphinsäure/Dimethylcyclohexylamin-Salzes (PPA/DMCA) zugetropft, wobei die Temperatur des Reaktionsgemisches aufgrund der einsetzenden Exothermie bis auf 58°C anstieg. Nach beendeter Zugabe wurde weitere 15 min bei 50°C gerührt. Nach Abkühlen auf Raumtemperatur lag ein Phosphinatgruppen enthaltendes Polyisocyanat mit folgenden Kenndaten vor:

| | |
|---|---|
| NCO-Gehalt: | 20,2 % |
| Viskosität (23 °C): | 7500 mPas |
| Farbzahl (Hazen): | 22 |
| Emulgierbarkeit (MTG): | 154 nm |

### Beispiel 2 (erfindungsgemäß)

### Herstellung eines Phenylphosphinsäure/Triethylamin-Salzes

Nach dem in Beispiel 1 beschriebenen Verfahren wurden 202,4 g (2,0 mol) Triethylamin wurden mit 285,8 g (2,0 mol) Phenylphosphinsäure umgesetzt. Es wurde ein Phenylphosphinsäure/Triethylamin-Salz in Form einer klaren, schwach gelben ionischen Flüssigkeit mit einer Viskosität von 123 mPas erhalten.

### Herstellung eines ionisch hydrophilierten HDI-Trimerisats

Nach dem in Beispiel 1 beschriebenen Verfahren wurden 480,0 g (2,48 val) des Isocyanuratgruppen-haltigen Ausgangspolyisocyanates A1) 20,0 g (0,082 mol) des vorstehend beschriebenen flüssigen Phenylphosphinsäure/Triethylamin-Salzes umgesetzt Es wurde ein Phosphinatgruppen enthaltendes Polyisocyanat mit folgenden Kenndaten erhalten:

| | |
|---|---|
| NCO-Gehalt: | 20,1 % |
| Viskosität (23 °C): | 7860 mPas |
| Farbzahl (Hazen): | 27 |
| Emulgierbarkeit (MTG): | 163 nm |

### Beispiel 3 (erfindungsgemäß)

### Herstellung eines Phenylphosphinsäure/Diisopropylethylamin-Salzes

Nach dem in Beispiel 1 beschriebenen Verfahren wurden 258,5 g (2,0 mol) Diisopropylethylamin wurden mit 285,8 g (2,0 mol) Phenylphosphinsäure umgesetzt. Es wurde ein Phenylphosphinsäure/Diisopropylethylamin-Salz in Form einer klaren, schwach gelben ionischen Flüssigkeit mit einer Viskosität von 670 mPas erhalten.

### Herstellung eines ionisch hydrophilierten HDI-Trimerisats

Nach dem in Beispiel 1 beschriebenen Verfahren wurden 480,0 g (2,48 val) des Isocyanuratgruppen-haltigen Ausgangspolyisocyanates A1) 20,0 g (0,074 mol) des vorstehend beschriebenen flüssigen Phenylphosphinsäure/Diisopropylethylamin-Salzes umgesetzt. Es wurde ein Phosphinatgruppen enthaltendes Polyisocyanat mit folgenden Kenndaten erhalten:

| | |
|---|---|
| NCO-Gehalt: | 20,2 % |
| Viskosität (23 °C): | 8200 mPas |
| Farbzahl (Hazen): | 20 |
| Emulgierbarkeit (MTG): | 172 nm |

### Beispiel 4 (erfindungsgemäß)

### Herstellung eines n-Butylphosphinsäure/Dimethylcyclohexylamin-Salzes

Nach dem in Beispiel 1 beschriebenen Verfahren wurden 255,4 g (2,0 mol) Dimethylcyclohexylamin wurden mit 244,2 g (2,0 mol) n-Butylphosphinsäure umgesetzt. Es wurde ein n-Butylphosphinsäure/Dimethylcyclohexylamin-Salz in Form einer klaren, fast farblosen ionischen Flüssigkeit mit einer Viskosität von 65 mPas erhalten.

### Herstellung eines ionisch hydrophilierten HDI-Trimerisats

Nach dem in Beispiel 1 beschriebenen Verfahren wurden 480,0 g (2,48 val) des Isocyanuratgruppen-haltigen Ausgangspolyisocyanates A1) 20,0 g (0,080 mol) des vorstehend beschriebenen flüssigen n-Butylphosphinsäure/Dimethylcyclohexylamin-Salzes umgesetzt Es wurde ein Phosphinatgruppen enthaltendes Polyisocyanat mit folgenden Kenndaten erhalten:

| | |
|---|---|
| NCO-Gehalt: | 20,1 % |
| Viskosität (23 °C): | 9030 mPas |
| Farbzahl (Hazen): | 20 |
| Emulgierbarkeit (MTG): | 157 nm |

### Beispiel 5 (erfindungsgemäß)

445,5 g (2,30 val) der Polyisocyanatkomponente A1) wurden bei 100 °C unter trockenem Stickstoff und Rühren vorgelegt, innerhalb von 30 min mit 50 g (0,10 val) eines Methoxypolyethylenoxidpolyetheralkohols des Molekulargewichts von 500 versetzt und bei dieser Temperatur weiter gerührt, bis der NCO-Gehalt der Mischung nach etwa 2 h auf den einer vollständigen Urethanisierung entsprechenden Wert von 18,6 % gefallen war. Der Reaktionsansatz wurde auf 50°C abgekühlt. Anschließend wurden bei dieser Temperatur innerhalb von 20 Minuten 4,5 g (0,017 mol) des flüssigen Phenylphosphinsäure/Dimethylcyclohexylamin-Salzes (PPA/DMCA) zugetropft, wobei die Temperatur des Reaktionsgemisches aufgrund der einsetzenden Exothermie bis auf 58°C anstieg. Nach beendeter Zugabe wurde weitere 15 min bei 50°C gerührt. Nach Abkühlen auf Raumtemperatur lag ein nichtionisch-ionisch modifiziertes, Phosphinatgruppen enthaltendes Polyisocyanat mit folgenden Kenndaten vor:

| | |
|---|---|
| NCO-Gehalt: | 18,3 % |
| Viskosität (23 °C): | 3900 mPas |
| Farbzahl (Hazen): | 24 |
| Emulgierbarkeit (MTG): | 224 nm |

### Beispiele 6 bis 12 (erfindungsgemäß)

Nach dem in Beispiel 1 beschriebenen Verfahren wurden unterschiedliche Polyisocyanate A) unter Verwendung der in den Beispielen 1 bis 3 beschriebenen Phenylphosphinsäure-Salzen zu Phosphinatgruppen enthaltenden Polyisocyanaten umgesetzt. Die nachfolgende Tabelle 1 zeigt die Zusammensetzung der Reaktionsansätze in Gew.-Teilen sowie die Kenndaten der erhaltenen Produkte.

**Tabelle 1**

| **Beispiel** | | **6** | **7** | **8** | **9** | **10** | **11** | **12** |
|---|---|---|---|---|---|---|---|---|
| Ausgangspolyisocyanat A1) | [Gew.-Teile] | 482,5 | - | - | - | - | 192,0 | 490,0 |
| Ausgangspolyisocyanat A2) | [Gew.-Teile] | - | 411,7 | - | - | - | - | - |
| Ausgangspolyisocyanat A3) | [Gew.-Teile] | - | - | 432,0 | - | - | - | - |
| Ausgangspolyisocyanat A4) | [Gew.-Teile] | - | - | - | 482,5 | - | 288,0 | - |
| Ausgangspolyisocyanat A5) | [Gew.-Teile] | - | - | - | - | 482,5 | - | - |
| PPA/DMAC | [Gew.-Teile] | 17,5 | 12,0 | 18,0 | 17,5 | 17,5 | 20,0 | 10,0 |
| 2,6-Di-tert-butyl-4-methylphenol | [ppm] | - | - | - | - | - | - | 50 |
| Butylacetat | [Gew.-Teile] | - | 76,3 | - | - | - | - | - |
| Propylenglykoldiacetat | [Gew.-Teile] | - | - | 50,0 | - | - | - | - |
| NCO-Gehalt: | [%] | 20,4 | 9,2 | 18,3 | 21,6 | 22,1 | 20,7 | 20,9 |
| Viskosität (23°C): | [mPas] | 7200 | 262 | 4860 | 2260 | 1370 | 3800 | 5520 |
| Festkörper-Gehalt | [%] | 100 | 60 | 90 | 100 | 100 | 100 | 100 |
| Farbzahl (Hazen): | | 23 | 31 | 56 | 29 | 33 | 18 | 17 |
| Emulgierbarkeit (MTG): | [nm] | 232 | 458 | 198 | 297 | 254 | 176 | 402 |

Die Beispiele 1 bis 12 zeigen, dass sich Polyisocyanate unterschiedlicher chemischer Struktur mit Salzen monosubstituierter Phosphinsäuren bereits bei niedrigen Temperaturen und innerhalb kurzer Zeit umsetzen lassen, wobei ionisch modifizierte, P-substituierte Carbamoylphosphinatgruppen enthaltende Polyisocyanatgemische erhalten werden, die sich durch hohe Isocyanatgehalte und hervorragende Dispergierbarkeit auszeichnen.

## Patentansprüche

1. Ionisch modifiziertes Polyisocyanatgemisch, enthaltend eine oder mehrere Isocyanatgruppen und eine oder mehrere P-substituierte Carbamoylphosphinatstrukturen.

2. Polyisocyanatgemisch gemäß Anspruch 1, **dadurch gekennzeichnet, dass** es zusätzlich eine oder mehrere Isocyanurat-, Allophanat-, Urethan-, Harnstoff-, Uretdion-, Iminooxadiazindion-, Oxadiazintrion- und/oder Biuretstruktur enthält.

3. Polyisocyanatgemisch gemäß Anspruch 1 oder 2, **dadurch gekennzeichnet, dass** es einen nach DIN EN ISO 11909:2007-05 bestimmten NCO-Gehalt von 5,8 bis 25,9 Gew.-%, vorzugsweise von 7,8 bis 24,9 Gew,-%, besonders bevorzugt von 9,7 bis 23,9 Gew.-%, bezogen auf das Gesamtgewicht des Polyisocyanatgemisches, aufweist.

4. Polyisocyanatgemisch gemäß einem der Ansprüche 1 bis 3, **dadurch gekennzeichnet, dass** es einen nach DIN EN ISO 10283:2007-11 gaschromatographisch mit internem Standard gemessenen Rest-Monomeren Gehalt von weniger als 0,14 Gew.-%, bevorzugt weniger als 0,12 Gew.-% und besonders bevorzugt weniger als 0,10 Gew.-%, bezogen auf das Gesamtgewicht des Polyisocyanatgemisches, aufweist.

5. Polyisocyanatgemisch gemäß einem der Ansprüche 1 bis 4, **dadurch gekennzeichnet, dass** die P-substituierte Carbamoylphosphinatstruktur eine der allgemeinen Formel (III) 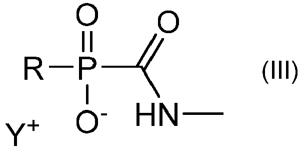 ist, in welcher
R für einen beliebigen gesättigten oder ungesättigten, linearen oder verzweigten, aliphatischen Rest mit 1 bis 18 Kohlenstoffatomen, gesättigten oder ungesättigten cycloaliphatischen Rest mit 5 bis 18 Kohlenstoffatomen, araliphatischen Rest mit 7 bis 18 Kohlenstoffatomen und/oder aromatischen Rest mit 6 bis 18 Kohlenstoffatomen steht, der jeweils substituiert oder unsubstituiert ist und/oder Heteroatome in der Kette aufweist und
Y+ für ein Alkalikation oder ein protoniertes tertiäres Amin steht.

6. Polyisocyanatgemisch gemäß einem der Ansprüche 1 bis 5, **dadurch gekennzeichnet, dass** es einen Gehalt an P-substituierten Carbamoylphosphinatstrukturen (berechnet als O₂PCONH, Molekulargewicht = 106 g/mol) von 0,10 bis 33,1 Gew.-%, bevorzugt von 0,17 bis 19,8 Gew.-%, besonders bevorzugt von 0,33 bis 13,2 Gew.-%, bezogen auf das Gesamtgewicht des Polyisocyanatgemisches, aufweist.

7. Verfahren zur Herstellung eines ionisch modifizierten Polyisocyanatgemisches, umfassend eine Umsetzung von
1) mindestens einem Polyisocyanat A) mit
2) mindestens einer monosubstituierten Phosphinsäure B), wobei die Phosphinsäuregruppen zumindest anteilig vor, während und/oder im Anschluß an die Umsetzung von A) mit B) neutralisiert werden, und
3) gegebenenfalls mit mindestens einer nichtionisch hydrophilen oder hydrophoben organischen Verbindung C), die mindestens eine gegenüber Isocyanaten reaktive Gruppe aufweisen, und
4) gegebenenfalls in Gegenwart weiterer Hilfs- und Zusatzstoffe D).

8. Verfahren gemäß Anspruch 7, **dadurch gekennzeichnet, dass** das mindestens eine Polyisocyanat A) aliphatisch, cycloaliphatisch, araliphatisch und/oder aromatisch gebundene Isocyanatgruppen aufweist und/oder bevorzugt ein oder mehrere Isocyanuratstrukturen enthaltende Polyisocyanate auf Basis von 1,5-Diisocyanatopentan, 1,6-Diisocyanatohexan, 1-Isocyanato-3,3,5-trimethyl-5-isocyanatomethylcyclohexan, 1,3-Bis(isocyanatomethyl)-benzol, Bis-(isocyanatomethyl)-norbornan und/oder 4,4'-Diisocyanatodicyclohexylmethan umfasst.

9. Verfahren gemäß Anspruch 7 oder 8, **dadurch gekennzeichnet, dass** die mindestens eine monosubstituierte Phosphinsäure B), eine der allgemeinen Formel (I) 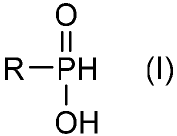 ist, in welcher R für einen beliebigen gesättigten oder ungesättigten, linearen oder verzweigten, aliphatischen Rest mit 1 bis 18 Kohlenstoffatomen, gesättigten oder ungesättigten cycloaliphatischen Rest mit 5 bis 18 Kohlenstoffatomen, araliphatischen Rest mit 7 bis 18 Kohlenstoffatomen und/oder aromatischen Rest mit 6 bis 18 Kohlenstoffatomen steht, der jeweils substituiert oder unsubstituiert ist und/oder Heteroatome in der Kette aufweist, vorzugsweise in welcher R für einen gegebenenfalls substituierten aromatischen Rest mit 6 bis 18 Kohlenstoffatomen steht und besonders bevorzugt für Phenyl steht.

10. Verfahren gemäß einem der Ansprüche 7 bis 9, **dadurch gekennzeichnet, dass** die mindestens eine monosubstituierte Phosphinsäure B) in einer Menge von 0,3 bis 25,0 Gew.-%, bevorzugt von 0,5 bis 15,0 Gew.-%, besonders bevorzugt von 1,0 bis 10,0 Gew.-%, bezogen auf das Gesamtgewicht der Verbindungen A) und B), zum Einsatz kommt.

11. Verfahren gemäß einem der Ansprüche 7 bis 10, **dadurch gekennzeichnet, dass** die mindestens eine monosubstituierte Phosphinsäure B) zumindest anteilig vor, während und/oder im Anschluß an die Umsetzung von A) mit B) mit einem tertiären Amin, beovzugt mit Triethylamin, N,N-Dimethylbutylamin, N,N-Diethylmethylamin, N,N-Diisopropylethylamin, N,N-Dimethylcyclohexylamin, N-Methylpiperidin, N-Ethylmorpholin oder einem beliebigen Gemisch der vorgenannten tertiären Amine neutralisiert wird.

12. Verfahren gemäß einem der Ansprüche 7 bis 11, **dadurch gekennzeichnet, dass** das tertiäre Amin in einer Menge zum Einsatz kommt, die einem Äquivalentverhältnis von Neutralisationsmittel zu Phosphinsäuregruppen der Komponente B) von 0,2 bis 2,0, vorzugsweise von 0,5 bis 1,5, besonders bevorzugt 0,95 bis 1,05 entspricht.

13. Verwendung mindestens eines ionisch modifizierten Polyisocyanatgemisches gemäß einem der Ansprüche 1 bis 6 als Ausgangskomponente bei der Herstellung von Polyurethan- und/oder Polyharnstoffkunststoffen.

14. Beschichtungsmittel enthaltend mindestens ein ionisch modifiziertes Polyisocyanat, erhältlich oder hergestellt durch ein Verfahren gemäß einem der Ansprüche 7 bis 12, und/oder enthaltend mindestens ein ionisch modifiziertes Polyisocyanatgemisch gemäß einem der Ansprüche 1 bis 6.

15. Substrat, zumindest anteilig beschichtet mit einem gegebenenfalls unter Wärmeeinwirkung ausgehärteten Beschichtungsmittel gemäß Anspruch 14.

## Claims

1. Ionically modified polyisocyanate mixture comprising one or more isocyanate groups and one or more P-substituted carbamoylphosphinate structures.

2. Polyisocyanate mixture according to Claim 1, **characterized in that** it additionally comprises one or more isocyanurate, allophanate, urethane, urea, uretdione, iminooxadiazinedione, oxadiazinetrione and/or biuret structures.

3. Polyisocyanate mixture according to Claim 1 or 2, **characterized in that** it has an NCO content, determined according to DIN EN ISO 11909:2007-05, of from 5.8% to 25.9% by weight, preferably from 7.8% to 24.9% by weight, more preferably from 9.7% to 23.9% by weight, based on the total weight of the polyisocyanate mixture.

4. Polyisocyanate mixture according to any of Claims 1 to 3, **characterized in that** it has a residual monomer content, measured by gas chromatography with internal standard according to DIN EN ISO 10283:2007-11, of less than 0.14% by weight, preferably less than 0.12% by weight and more preferably less than 0.10% by weight, based on the total weight of the polyisocyanate mixture.

5. Polyisocyanate mixture according to any of Claims 1 to 4, **characterized in that** the P-substituted carbamoylphosphinate structure is one of the general formula (III) 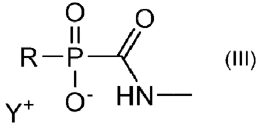 in which
R is any saturated or unsaturated, linear or branched aliphatic radical having 1 to 18 carbon atoms, saturated or unsaturated cycloaliphatic radical having 5 to 18 carbon atoms, araliphatic radical having 7 to 18 carbon atoms and/or aromatic radical having 6 to 18 carbon atoms, in each case substituted or unsubstituted and/or having heteroatoms in the chain, and Y+ is an alkali metal cation or a protonated tertiary amine.

6. Polyisocyanate mixture according to any of Claims 1 to 5, **characterized in that** it has a content of P-substituted carbamoylphosphinate structures (calculated as O₂PCONH, molecular weight = 106 g/mol) of from 0.10% to 33.1% by weight, preferably from 0.17% to 19.8% by weight, more preferably from 0.33% to 13.2% by weight, based on the total weight of the polyisocyanate mixture.

7. Method for preparing an ionically modified polyisocyanate mixture, comprising a reaction of
1) at least one polyisocyanate A) with
2) at least one monosubstituted phosphinic acid B), where at least a proportion of the phosphinic acid groups are neutralized before, during and/or after the reaction of A) with B), and
3) optionally with at least one nonionically hydrophilic or hydrophobic organic compound C) that has at least one isocyanate-reactive group, and
4) optionally in the presence of further auxiliaries and additives D).

8. Method according to Claim 7, **characterized in that** the at least one polyisocyanate A) has aliphatically, cycloaliphatically, araliphatically and/or aromatically attached isocyanate groups and/or preferably comprises one or more polyisocyanates containing isocyanurate structures based on 1,5-diisocyanatopentane, 1,6-diisocyanatohexane, 1-isocyanato-3,3,5-trimethyl-5-isocyananatomethylcyclohexane, 1,3-bis(isocyanatomethyl)benzene, bis(isocyanatomethyl)norbornane and/or 4,4'-diisocyanatodicyclohexylmethane.

9. Method according to Claim 7 or 8, **characterized in that** the at least one monosubstituted phosphinic acid B) is one of the general formula (I) 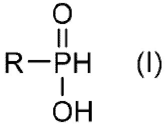 in which R is any saturated or unsaturated, linear or branched aliphatic radical having 1 to 18 carbon atoms, saturated or unsaturated cycloaliphatic radical having 5 to 18 carbon atoms, araliphatic radical having 7 to 18 carbon atoms and/or aromatic radical having 6 to 18 carbon atoms, in each case substituted or unsubstituted and/or having heteroatoms in the chain, preferably in which R is an optionally substituted aromatic radical having 6 to 18 carbon atoms and more preferably is phenyl.

10. Method according to any of Claims 7 to 9, **characterized in that** the at least one monosubstituted phosphinic acid B) is used in an amount of from 0.3% to 25.0% by weight, preferably from 0.5% to 15.0% by weight, more preferably from 1.0% to 10.0% by weight, based on the total weight of compounds A) and B).

11. Method according to any of Claims 7 to 10, **characterized in that** at least a proportion of the at least one monosubstituted phosphinic acid B) is neutralized with a tertiary amine, preferably with triethylamine, N,N-dimethylbutylamine, N,N-diethylmethylamine, N,N-diisopropylethylamine, N,N-dimethylcyclohexylamine, N-methylpiperidine, N-ethylmorpholine or any mixture of said tertiary amines before, during and/or after the reaction of A) with B).

12. Method according to any of Claims 7 to 11, **characterized in that** the tertiary amine is used in an amount that corresponds to an equivalents ratio of neutralizing agent to phosphinic acid groups in component B) of from 0.2 to 2.0, preferably from 0.5 to 1.5, more preferably from 0.95 to 1.05.

13. Use of at least one ionically modified polyisocyanate mixture according to any of Claims 1 to 6 as starting component in the production of polyurethane plastics and/or polyurea plastics.

14. Coating composition comprising at least one ionically modified polyisocyanate obtainable or produced by a method according to any of Claims 7 to 12 and/or comprising at least one ionically modified polyisocyanate mixture according to any of Claims 1 to 6.

15. Substrate coated at least in part with an optionally heat-cured coating composition according to Claim 14.

## Revendications

1. Mélange de polyisocyanates ioniquement modifiés, contenant un ou plusieurs groupes isocyanate et une ou plusieurs structures de phosphinate de carbamoyle substitué sur P.

2. Mélange de polyisocyanates selon la revendication 1, **caractérisé en ce qu'**il contient en outre une ou plusieurs structures isocyanurate, allophanate, uréthane, urée, uretdione, iminooxadiazinedione, oxadiazinetrione et/ou biuret.

3. Mélange de polyisocyanates selon la revendication 1 ou 2, **caractérisé en ce qu'**il présente une teneur en NCO, déterminée selon la norme DIN EN ISO 11909:2007-05, de 5,8 à 25,9% en poids, de préférence de 7,8 à 24,9% en poids, de manière particulièrement préférée de 9,7 à 23,9% en poids, par rapport au poids total du mélange de polyisocyanates.

4. Mélange de polyisocyanates selon l'une des revendications 1 à 3, **caractérisé en ce qu'**il présente une teneur en monomères résiduels, mesurée selon la norme DIN EN ISO 10283:2007-11 par chromatographie en phase gazeuse avec un étalon interne, inférieure à 0,14% en poids, de préférence inférieure à 0,12% en poids et de manière particulièrement préférée inférieure à 0,10% en poids, par rapport au poids total du mélange de polyisocyanates.

5. Mélange de polyisocyanate selon l'une des revendications 1 à 4, **caractérisé en ce que** la structure de phosphinate de carbamoyle substitué sur P est une structure de formule générale (III) 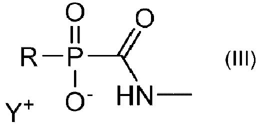 dans laquelle
R représente un radical quelconque aliphatique, saturé ou insaturé, linéaire ou ramifié, comprenant 1 à 18 atomes de carbone, un radical quelconque cycloaliphatique saturé ou insaturé, comprenant 5 à 18 atomes de carbone, un radical quelconque araliphatique comprenant 7 à 18 atomes de carbone et/ou un radical quelconque aromatique comprenant 6 à 18 atomes de carbone, qui est à chaque fois substitué ou non substitué et/ou présente à chaque fois des hétéroatomes dans la chaîne et Y+ représente un cation alcalin ou une amine tertiaire protonée.

6. Mélange de polyisocyanates selon l'une des revendications 1 à 5, **caractérisé en ce qu'**il présente un teneur en structures de phosphinate de carbamoyle substitué sur P (calculées sous forme de O₂PCONH, masse moléculaire = 106 g/mole) de 0,10 à 33,1% en poids, de préférence de 0,17 à 19,8% en poids, de manière particulièrement préférée de 0,33 à 13,2% en poids, par rapport au poids total du mélange de polyisocyanates.

7. Procédé de préparation d'un mélange de polyisocyanates ioniquement modifiés, comprenant une transformation de
1) au moins un polyisocyanate A) avec
2) au moins un acide phosphinique monosubstitué B), les groupes acide phosphinique étant neutralisés au moins en partie avant, pendant et/ou après la transformation de A) avec B) et
3) le cas échéant avec au moins un composé organique non ionique, hydrophile ou hydrophobe C) qui présente au moins un groupe réactif vis-à-vis des isocyanates, et
4) le cas échéant en présence d'autres adjuvants et additifs D).

8. Procédé selon la revendication 7, **caractérisé en ce que** ledit au moins un polyisocyanate A) présente des groupes isocyanate liés de manière aliphatique, cycloaliphatique, araliphatique et/ou aromatique et/ou comprend de préférence un ou plusieurs polyisocyanates contenant des structures isocyanurate à base de 1,5-diisocyanatopentane, 1,6-diisocyanatohexane, 1-isocyanato-3,3,5-triméthyl-5-isocyanatométhylcyclohexane, 1,3-bis(isocyanatométhyl)-benzène, bis-(isocyanatométhyl)-norbornane et/ou 4,4'-diisocyanatodicyclohexylméthane.

9. Procédé selon la revendication 7 ou 8, **caractérisé en ce que** ledit au moins un acide phosphinique monosubstitué B) est un acide de formule générale (I) 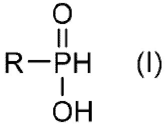 dans laquelle R représente un radical quelconque aliphatique, saturé ou insaturé, linéaire ou ramifié, comprenant 1 à 18 atomes de carbone, un radical quelconque cycloaliphatique saturé ou insaturé, comprenant 5 à 18 atomes de carbone, un radical quelconque araliphatique comprenant 7 à 18 atomes de carbone et/ou un radical quelconque aromatique comprenant 6 à 18 atomes de carbone, qui est à chaque fois substitué ou non substitué et/ou présente à chaque fois des hétéroatomes dans la chaîne, de préférence dans laquelle R représente un radical aromatique le cas échéant substitué comprenant 6 à 18 atomes de carbone et de manière particulièrement préférée représente phényle.

10. Procédé selon l'une des revendications 7 à 9, **caractérisé en ce que** ledit au moins un acide phosphinique monosubstitué B) est utilisé en une quantité de 0,3 à 25,0% en poids, de préférence de 0,5 à 15,0% en poids, de manière particulièrement préférée de 1,0 à 10,0% en poids, par rapport au poids total des composés A) et B).

11. Procédé selon l'une des revendications 7 à 10, **caractérisé en ce que** ledit au moins un acide phosphinique monosubstitué B) est neutralisé au moins en partie, avant, pendant et/ou après la transformation de A) avec B) à l'aide d'une amine tertiaire, de préférence avec de la triéthylamine, de la N,N-diméthylbutylamine, de la N,N-diéthylméthylamine, de la N,N-diisopropyléthylamine, de la N,N-diméthylcyclohexylamine, de la N-méthylpipéridine, de la N-éthylmorpholine ou d'un mélange des amines tertiaires susmentionnées.

12. Procédé selon l'une des revendications 7 à 11, **caractérisé en ce que** l'amine tertiaire est utilisée en une quantité qui correspond à un rapport d'équivalents d'agent de neutralisation aux groupes acide phosphinique du composant B) de 0,2 à 2,0, de préférence de 0,5 à 1,5, de manière particulièrement préférée de 0,95 à 1,05.

13. Utilisation d'au moins un mélange de polyisocyanates ioniquement modifiés selon l'une des revendications 1 à 6 comme composant de départ lors de la production de matériaux synthétiques à base de polyuréthane et/ou de polyurée.

14. Agent de revêtement contenant au moins un polyisocyanate ioniquement modifié, pouvant être obtenu ou préparé par un procédé selon l'une des revendications 7 à 12 et/ou contenant au moins un mélange de polyisocyanates ioniquement modifiés selon l'une des revendications 1 à 6.

15. Substrat revêtu au moins en partie par un agent de revêtement selon la revendication 14, le cas échéant durci sous l'effet de la chaleur.
